(19) Europäisches Patentamt
European Patent Office
Office européen des brevets

(11) EP 0 456 675 B1

(12) **EUROPEAN PATENT SPECIFICATION**

(45) Date of publication and mention of the grant of the patent:
**10.09.1997 Bulletin 1997/37**

(21) Application number: **90902231.1**

(22) Date of filing: **02.02.1990**

(51) Int Cl.[6]: **G06F 9/44**, G06F 17/40

(86) International application number:
**PCT/EP90/00213**

(87) International publication number:
**WO 90/09001 (09.08.1990 Gazette 1990/19)**

(54) **SIGNAL PROCESSING APPARATUS AND METHOD**

GERÄT UND VERFAHREN ZUR SIGNALVERARBEITUNG

APPAREIL ET PROCEDE DE TRAITEMENT DE SIGNAUX

(84) Designated Contracting States:
**AT BE CH DE DK ES FR GB IT LI LU NL SE**

(30) Priority: **03.02.1989 GB 8902414**
**19.10.1989 US 424112**

(43) Date of publication of application:
**21.11.1991 Bulletin 1991/47**

(73) Proprietor: **BANG & OLUFSEN HOLDING A/S**
**DK-7600 Struer (DK)**

(72) Inventor: **GERT, Lykke, Moeller**
**DK-7620 Lemvig (DK)**

(74) Representative: **Tomlinson, Kerry John**
**Frank B. Dehn & Co.,**
**European Patent Attorneys,**
**179 Queen Victoria Street**
**London EC4V 4EL (GB)**

(56) References cited:
- **1986 Cern School of Computing, 30 August - 13 September 1986, Renesse, The Netherlands, Proceedings, Editor: C. Verkerk, (Geneve CH), C.R. PELLEGRINI: "Underlying Principles of Expert Systems", pages 265-282**
- **"Intelligent Tutoring Systems", 1982, Edited by D. SLEEMAN et al.:, Academic Press, (London, GB), J.S. BROWN et al.: "Pedagogical, Natural Language and Knowledge Engineering Techniques in Sophie I, II and III", pages 227-282**
- **ACM Transactions on Database Systems, vol. 13, no. 2, June 1988, ACM, (New York, US), M. WINSLETT: "A Model-Based Approach to Updating Databases with Incomplete Information", pages 167-196**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

EP 0 456 675 B1

Printed by Jouve, 75001 PARIS (FR)

## Description

This invention relates to apparatus and methods for processing signals, for example signals used for communication or control purposes. It is particularly applicable to processing signals which can consist of a plurality of components each representative of an aspect of a physical entity and the invention provides means for improving the information content or reducing the uncertainty of such signals.

Signal processing systems are known which process signals consisting of a plurality of components in accordance with predetermined information about relationships between the components. So-called 'artificial intelligence' systems employ processors which represent known relationships in some form of rule representation and apply the rule representation to an input signal to produce an output signal having an enhanced information content. Conventionally, the rule representation may contain a large number of logical relations between the possible components of the input signal (which generally speaking represent known information about a physical entity) and a searching process is carried out through the rule representation in an attempt to derive further relations and information. During the searching process further rules may be established and a large amount of information may have to be stored concerning the results of the application of individual rules already visited. Thus a problem with conventional systems is that storage requirements may become very large. This has proved a disadvantage when attempting to implement conventional systems in small-scale processing apparatus, such as microcomputer systems.

1986 Cern School of Computing, 30 Aug-13 Sep 1986, Renesee, Netherlands, C.R. Pellegrini, "Underlying principles of expert systems" pp265-282 describes such a conventional rule-based artificial intelligence system in which a searching procedure applies the rules to the input signal to produce an enhanced output signal. The preambles to the independent claims are based on this document.

Considerable effort has also been devoted to rule searching strategies in an attempt to find techniques for rapidly arriving at the required information, but none of the known techniques are entirely satisfactory.

Viewed from one aspect, the invention provides a signal processing apparatus for reducing the uncertainty of an input signal which can consist of a plurality of components, comprising: means for storing one or more rules each expressing a relation between a plurality of the components; means for receiving said input signal; and means for determining from the input signal and the rules information about the value of at least one component of the input signal; characterised in that: each rule is stored in the form of signal representations of sets of combinations of the components involved in the rule, which sets indicate in respect of all combinations of the components involved in the rule whether those combinations are possible; said receiving means further comprises means for identifying all rules which contain information about a component of said input signal which is determinate; and in that said apparatus further comprises: means for identifying combinations consistent with the values of components of the input signal from the respective identified rules; and means for determining from the identified combinations information about the value of at least one component of the input signal.

Viewed from another aspect, the invention provides a signal processing method for reducing the uncertainty of an input signal which can consist of a plurality of components each representative of an aspect of a physical entity, comprising: storing one or more rules each expressing a relation between a plurality of the components; and determining from the input signal and the rules the value of an indefinite component of the input signal; characterised by: storing each rule in the form of signal representations of sets of combinations of the components involved in the rule, which sets indicate in respect of all combinations of the components involved in the rule whether those combinations are possible; identifying all rules which contain information about a component of said input signal which is determinate; identifying combinations consistent with the values of the components of the input signal from the respective identified rules; and determining from the identified combinations the value of an indefinite component of the input signal.

Preferably the components of the input signal comprise binary representations of aspects of a physical entity; further preferably, the means for storing is arranged to store an array of binary codes each representing a combination of said components which is known to be possible.

Certain embodiments of the invention will now be described by way of example and with reference to the accompanying drawings, in which:

Figure 1 illustrates the general concept of a signal processing method according to the invention;
Figure 2 represents three possible kinds of knowledge representation;
Figure 3 is a block diagram of signal processing apparatus according to the invention;
Figure 3a illustrates the major data flow of the apparatus illustrated in Figure 3 in flow chart form;
Figure 3b illustrates the operation of the rule base scanning unit of Figure 3 in flow chart form;
Figure 3c illustrates the operation of the rule consultation unit illustrated in Figure 3 in flow chart form;
Figure 3d illustrates the operation of the rule determination unit in flow chart form.
Figure 4 illustrates in more detail the rule consultation unit of Figure 3;
Figure 5 illustrates the contents of registers in the apparatus of Figures 3 and 4;

Figure 6 illustrates the structure of the rule base of the apparatus of Figs. 3 and 4;

Figure 7 illustrates the processing of a single rule;

Figure 8 is a flow chart of steps carried out in the rule consultation unit of Figs. 3 and 4;

Figure 9 illustrates the logical process for identifying rules to visit performed by the rule base scanning unit of Fig. 3;

Figure 10 shows the same process as Figure 9 on a second iteration;

Figure 11 shows the results of the rule consultations of Figs. 9 and 10;

Figure 12 illustrates a rule consultation process using an array rule representation;

Figure 13 shows the inference engine of Fig. 3 extended with a rule determination unit and further registers;

Figure 14 illustrates the process of derived rule determination;

Figure 15 illustrates the process of theorem proving; and

Figure 16 illustrates the process of abduction.

Referring first to Figure 1, the signal processing apparatus is arranged to receive an input signal designated the input state vector SV and to convert it into an output signal, the output state vector, by the application of information contained in a rule base. The input state vector may contain information in some of the locations sl to sN about known aspects of a physical entity, for example the state of sensors, but generally other components of the input state vector will be unknown. It is the function of the signal processing apparatus and method to determine some or all of the unknown components where the rule base enables this. The output state vector is said to be the conjunction of the input state vector and the rule base.

In the present system the possible values stored in the state vector each have one of four possible two-bit forms which have the following meaning:

0 1 true
1 0 false
1 1 tautology (undefined or don't care)
0 0 contradiction

Figure 2 shows three possible ways of representing in a digital form a propositional relation between three aspects of a physical system. The following rule is given by way of example:

"If the system is at standby, or no disc is present, then the turntable is not rotating."

The Figure shows three binary state variables STBY, DISC, and ROTATING. Note that this rule is silent on certain combinations of the variables and thus also permits the turntable to be not rotating if a disc is present but the system is not at standby. Figure 2a shows an array form of representing this rule in which each of the eight bits in the boxes is associated with one of the eight combinations of the three variables and indicates whether or not that combination is allowable. This form of representation has the disadvantages that more information than necessary is stored, and that the array can become very large and difficult to address when the number of variables becomes large.

Figure 2b shows the rule represented in positive index form in which only the allowable combinations are listed. Figure 2c shows the complementary negative index form which lists the unallowable combinations.

Referring now to Figure 3, the main components of the signal processing apparatus, also referred to as an inference engine, are shown. The apparatus comprises a rule base memory 2 which is a memory in which the rules are stored, preferably in positive index form. It is to be noted that the rules (the columns in the Figure) will generally not be all the same size, depending upon the number of legal combinations in each rule. This is indicated by the different suffices C, J, D and S. In addition, the apparatus includes a proposition structure (PS) memory 1 which indicates the relation between the rules and the variables, i.e. which rules involve which variables. For example, a binary 1 will be stored at location Bij if variable Vj is involved in rule Ri. The information measured from the environment is stored in state vector register 10 and the apparatus includes a rule consultation unit 5 which operates on the contents of this register using the information contained in the proposition structure memory 1 and rule base memory 2 to provide new values in the state vector register 10 with all possible new information deduced. During this process a list is kept in explanation vector 7 of the numbers of rules which have led to new information, and if a contradiction is encountered the number of the rule giving the contradiction is stored in contradiction rule number register 6. The rules which are consulted are determined based on the information in proposition structure memory 1 by a rule base scanning unit 3, rule list register 4 and variable control and rule control registers 8 and 9 as will be described in more detail later. The major data flow in the apparatus is illustrated in the flow chart of Figure 3a. A summary written in the APL language is provided for each block in the flow chart adjacent the blocks in the flow chart of Figure 3a.

Before proceeding with a more detailed description of the apparatus, the information processing (inference) procedure will be explained with reference to a very simple case of only one rule. Assume, for example, that the rule is:

"If A or not B, then not C". This rule is transformed to positive index form:

| A | B | C |
|---|---|---|
| 0 | 0 | 0 |
| 0 | 1 | 0 |

(continued)

| A | B | C |
|---|---|---|
| 0 | 1 | 1 |
| 1 | 0 | 0 |
| 1 | 1 | 0 |

Suppose the input state "A is true; B and C are unknown" is measured from the environment. Thus, we have the input state vector:

| | | |
|---|---|---|
| A | 0 | 1 |
| B | 1 | 1 |
| C | 1 | 1 |

The rule consultation unit is effective to identify all of the rows in the rule matrix which satisfy the input state vector constraints. In this example it is the last two rows only. Each column of the sub-matrix containing only the identified rows is then tested: if a column contains all ls the corresponding state variable is bounded to be true; if all of the values in the column are 0, the state variable is bounded to be false; and if both 0 and 1 appear the state variable is unbounded (tautology). Thus we have the following output state vector after the consultation:

| | | |
|---|---|---|
| A | 0 | 1 |
| B | 1 | 1 |
| C | 1 | 0 |

with the interpretation "A is true, and C is false; B is unknown".

Returning now to a more detailed description of the preferred embodiment, the rule base memory 2 and proposition structure memory 1 will first be discussed. A precondition for simple inference methods is an unambiguous and compact knowledge representation. In conventional systems both of the well-known elements of knowledge, namely rules and facts, are stored in the same "knowledge base". In the present invention a clear distinction is made between rules and facts: rules or propositional functions are stored in the rule base memory 2 and facts are stored in the state vector register 10. Simple expressions and propositions like "A and B", "A or not A" (tautology) and "A and not A" (contradiction or inconsistency) are regarded as facts and not rules.

In a practical system, an operator interface (known as a compiler) has to be provided for converting rules expressed by an operator as logical relations into the binary form (preferably positive index form) used in the rule base memory. The compiler may also check for redundancy in the input information and inconsistency with previous rules. The former may be carried out with the theorem proving technique described later, and the latter with the derived rule technique. With current technology the positive index form is the most suitable due to high rule consultation speed, but the other forms may be used if preferred.

In the rule base memory 2 each legal bit combination in a rule is stored in an addressable memory location, e.g. in a 16-bit word. As mentioned above, the rules may have different sizes; thus the first rule may occupy C words and the second J words. The order of the individual legal combinations in a rule is without importance for the function of the invention. However, the order of the state variables is important because of the addressing mechanism used, as will be described. The variables in any rule are ordered in accordance with a common scheme, hereinafter referred to as the "ordered set" or "domain". This makes it possible to make a very simple addressing of rules and variables.

As mentioned above, the proposition structure memory 1 indicates the binary relation between rules and variables. Bij is 1 if variable j is found in rule i, else 0. One may regard the contents of the PS memory as the fundamental addressing information which is used to determine which rules to visit. A simple example illustrating the contents of the rule base memory 2 and the proposition structure memory 1 is given in Fig. 6. This concerns the following two rules:

Rule 1: "If the system is at standby, or no disc is present, then the turntable is not rotating".

Rule 2: "The pickup is on, if and only if the turntable is rotating".

An order for the variables is selected to apply throughout the whole system, for example the alphabetical order shown. The rules are transformed to positive index form (legal combinations), with the variables ordered in accordance with the predefined scheme or domain. The binary patterns are stored in the rule base memory 2. The corresponding proposition structure is stored in the PS memory 1. This clearly indicates that rule 1 involves STBY, DISC and ROTATING and rule 2 involves PICKUP and ROTATING. The variables within the rule words are ordered in accordance with the common domain, so the information in the PS memory indicates which variable the bits of the rule words represent. The operation of the rule base scanning unit 3 is illustrated in the flow chart of Figure 3b (the respective APL code is also provided).

Alternatively, the information stored in the PS memory may be represented in one of the following index forms:

(1) All variable indices associated with a rule represented as an integer vector.
(2) All rule indices associated with a variable represented as an integer vector.

Thus, the alternative representations of the PS information in Figure 6 are:

(1) Rule 1: 1 3 4
Rule 2: 2 3 , or:
(2) Var 1: 1
Var 2: 2
Var 3: 1 2
Var 4: 1

The rule consultation unit 5 will now be explained in more detail firstly with reference to processing a single simple rule. The operation of consultation unit 5 is illustrated in Figure 3c in flow chart form. Fig. 7 represents the simple rule: "If the system is at standby, or no disc is present, then the turntable is not rotating".
The input state measured from the environment is assumed to be "the system is at standby", giving the input state vector SV shown. The rule consultation unit identifies rows in the rule matrix satisfying the state vector constraint, i.e. the shaded area. As mentioned above, each column in the shaded sub-matrix is tested and any column containing all Is or all 0s is deduced to have the bounded value true or false respectively. Thus the output state vector shown is determined, with the interpretation "when the system is at standby, the turntable is not rotating; whether or not a disc is present is not known".

In this process the input state vector may be said to be conjugated with the rule and the conjunct projected on every axis to determine the corresponding output state vector. If the rule is represented in positive index form, this process can be implemented with a very simple binary pattern recognition which is easy to execute in hardware. Referring to Figs. 4 and 8, a global state vector is retained in the state vector register 10 and local state vector registers SV(1) and SV(2) are used in the rule consultation holding respectively the least significant bit and the most significant bit of the state vector. In order to optimise execution speed, the input constraints of the state vector are stored in two further local sixteen bit registers TV (true variables) and BV (bounded variables, i.e. known to be true or false). The initialisation unit 5.1 determines the rule address and the local input state vector by means of the global state vector 10 and proposition structure memory 1. Initially the local state vector registers are reset to zero. Thus in the present example the initial values of the local registers are

SV(1) = ...000
SV(2) = ...000
TV = ...001
BV = ...001

The steps of Fig. 8 are carried out in the scanning and projection unit 5.2 for a rule with N words W1, W2, ... WN. In step 8.1 a temporary counter i is set to 0 and in step 8.2 the current word is loaded. In step 8.3 it is determined whether the current word satisfies the state vector constraints and if it does not the next word is loaded via steps 8.4 and 8.5. If it does, the word is further tested via steps 8.6 and 8.7 which in effect OR the respective bits of the rule word with the corresponding upper bits of the local state vector and OR the complement of the rule word with the lower bits of the local state vector. It is to be noted that the steps 8.6 and 8.7 can be performed in either order and it is indeed possible to execute these operations in parallel for increased speed. The process terminates when all of the words have been tested as indicated by step 8.5.

In this example the result of this process will be

SV(1) = 110
SV(2) = 101

with the following interpretation

| | SV(1) | SV(2) | |
|---|---|---|---|
| DISC | 1 | 1 | (tautology) |
| ROTATING | 1 | 0 | (false) |
| STBY | 0 | 1 | (true) |

The control and explanation unit 5.3 updates the global state vector and the global control and explanation registers in accordance with the local output state vector registers SV(1) and SV(2). The global state vector 10 is updated from the individual local sub-registers SV(1) and SV(2). The addresses of the variables are read from the PS memory. If the local output state vector is found to be a contradiction, the CRN register 6 is updated with the index or similar addressing information of the contradiction rule and the state search is then interrupted.

The explanation vector EV 7 is updated if one or more variables were deduced during the rule consultation. In the above-mentioned example, ROTATING was deduced to be false. Hence, the rule index or similar addressing information is put into the ROTATING element of the EV register. The index is read from the PS memory.

Similarly, the variable control register VC 8 is updated if one or more variables were deduced during rule consultation. Again, in the above-mentioned example logical 1 is put into the ROTATING element of VC. Note that only newly bounded variables are identified in the VC register for rule control as described later. The rule control vector RC 9 is updated if the number of tautologies in the local output state vector is 0 or 1. A logical 0 is then put into the RC index of the current rule and this has the effect that that rule will not be consulted again.

At the end of the rule consultation the newly inferred information is available for all of the other rules and for the external environment.

In some circumstances, e.g. in a so-called state event control system, it may be desirable to make only one consultation of the rule base, so that the consequences at only one level of the current input conditions are determined. However, many applications will require the determination of the maximum amount of further information and in this case further consultations of the rule base (rule feedback) are required.

Therefore, another important aspect in the case of state event control is the distinction between input (independent) and output (dependent) variables. A very simple extension of the rule consultation technique mentioned so far, makes it possible to use the inference engine as a state event controller as well as a deduction machine. One may regard the state-event rules as dynamic rules, mapping the system state into a new state, and the normal propositional functions as static rules, representing a static state space.

Each rule is extended with an input/output header describing which variables are input and output (logical 1 and 0, respectively).

Consider for example the rule: (A or B) = C. If we select A,B as input variables, we get the following internal binary representation:

| | A | B | C |
|---|---|---|---|
| I/O | 1 | 1 | 0 |
| RW1 | 0 | 0 | 0 |
| RW2 | 0 | 1 | 1 |
| RW3 | 1 | 0 | 1 |
| RW4 | 1 | 1 | 1 |

The rule words RW1...RW4 are the normal positive index form. In this embodiment, A and B are independent; and each combination of A and B is associated with an output value.

When the rule is consulted, the BV register is assigned the value of the conjunction of the I/O header and the current BV value:

$$BV = I/O \text{ and } BV$$

In the case of a rule without any distinction between input and output (a normal static rule), all variables are to be handled as input.

If the rule is dynamic, the RC register is not updated after the rule consultation. In this case, the search towards an equilibrium may involve several consultations of the same rule.

In this embodiment, static and dynamic rules are not allowed to be mixed in the same base.

The overall operation of the inference engine will now be described with particular emphasis on the handling of a plurality of rules. The conjunction of a single rule and the corresponding state vector variables has just been described and this takes place repeatedly in the rule consultation unit 5. However in a rule base with more than one rule the rule base must be scanned to identify rules for consultation. Any rule which may deduce new information is a candidate and must be visited. The independent search module of the inference engine is the rule base scanning network 3, which generates the candidate rule numbers stored in the rule list register 4. The criteria of rule visitation are that at least one of the axes must be bounded to truth or falsehood, i.e. the rule involves a variable in the input vector which is determinate, and the current local state vector has not before been an input state vector of the same rule. All candidate rules with a common axis can be executed in parallel. When the candidates are consulted a new search must be executed (the rule control feedback in Fig. 2) to find a new set RL of candidate rules.

The state vector transformation is finished when a minimum of tautologies (or a minimum of uncertainty in the signal represented by SV) has been reached; that is, when the candidate rule list RL is empty, or when a contradiction is identified during consultation. In the example of Fig. 6, with the input information "the system is at standby" the contents of the state vector are

1 1
1 1
1 1
0 1

The contents of the rule control register will be

$$RC = 1\ 1.$$

A logical 1 in the rule control register means that the corresponding rule is to be searched. A zero makes it possible to disregard the rule as a rule candidate. In the present case both rules are accepted to visit. The variable control register has the following values

$$VC = 0\ 0\ 0\ 1.$$

Here a logical 1 means that the corresponding variable is identified as having been bounded since the last state search. By default all of the bounded variables in the input state vector are identified with a 1.

A list of candidate rules is determined by means of the rule base scanning unit 3 using the information from VC, RC and the PS memory, as illustrated in Fig. 9. The mathematical expression is: $RL_i = RC_i$ and (or (VC and $PS)_i$). In other words, the variable control word is ANDed with each row separately of PS and then the results are ORed to determine in which rules the bounded variables in VC occur, as indicated in the first line of Fig. 9. The result is conjugated with RC element by element as illustrated in the second line of Fig. 9. The rule control RC register may be user-accessible so that the user can exclude rules from the search.

All the rules identified in the rule list register RL are consulted. In this case only the first rule is a candidate.

As illustrated above, the result of the consultation is a deduction that ROTATING is false. This information may imply new deductions in other rules. Therefore, the ROTATING variable is set to a 1 in the VC register:

VC = 0 0 1 0.

The explanation vector EV 7 is updated also. The third variable was deduced in rule 1 and so the integer value 1 is stored in the third location of EV:

EV = 0 0 1 0.

If the rule consultation had resulted in a contradiction the CRN register 6 would be updated with the current rule number and the search terminated.

It is not possible to deduce more information from the current rule due to the fact that two of the three axes are bounded. Therefore a zero is placed in the rule control register RC to prevent further visits to this rule:

RC = 0 1

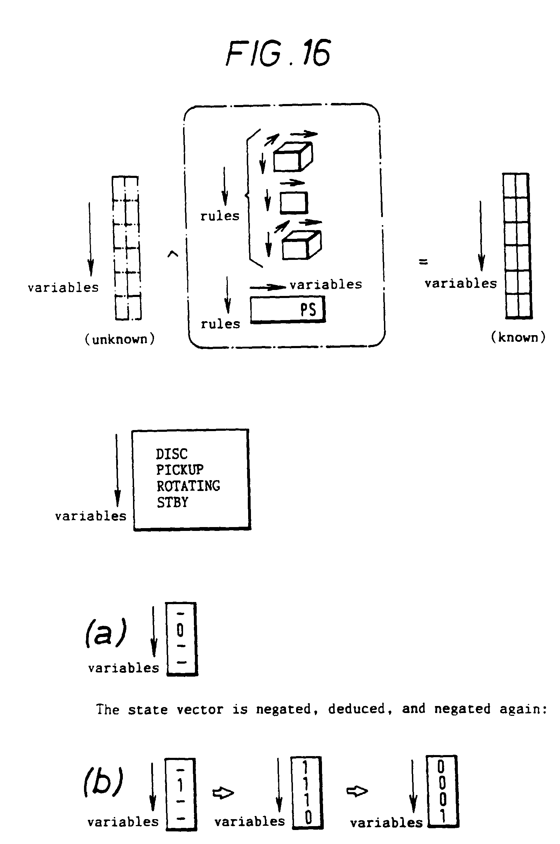

The rule base scanning unit is now reactivated to perform rule control feedback and to determine a new rule list. The process is shown in Fig. 10 and is similar to that of Fig. 9. The VC register is initialised to zero. Rule 2 is the only rule for consultation in the list and it is consulted in a process similar to that described above with reference to Fig. 7. The result is shown in Fig. 11. In the state vector variables here (and in Fig. 16 below) the values 0 and 1 are used for brevity to represent false and true. All of the variables in rule 2 are now bounded and so RC is updated with a zero:

RC = 0 0

The variable PICKUP was deduced in rule 2 and so the explanation vector EV is updated

EV = 0 2 1 0

Rule control feedback takes place again to reactivate the rule base scanning unit, but this time the rule control vector RC is zero and the rule list is zero and so the deduction is finished.

Naturally, in a more complex case more than one variable may be deduced in a rule consultation.

The positive index form of rule representation has been particularly described above. However, the array representation can be used as shown in Fig. 12. Fig. 12a shows the same rule as used in the examples above as a three-dimensional array. Again, the example assumes the input STBY is true. The conjunct of the input state vector and the rule is an array with the same structure as the rule (Fig. 12(b)) and the projection on each axis is carried out by means of the OR function (disjunction operation). Obviously, the projection on the input constraint axes will give an equivalent output. Thus, it is only necessary to do the projection on the unbounded (tautology) axes. This is an alternative implementation of the rule consultation; however, it requires a more complicated pattern search and with current technology the positive index form gives the fastest consultation speed.

The well known inference techniques like resolution, modus ponens, or modus tollens may be carried out straightforwardly by means of the state vector transformation described above. However, more complex or composite inferences such as the determination of derived rules, theorem proving and abduction may be performed by the apparatus and method of the invention. Fig. 13 shows the inference engine extended with a rule determination unit 12 and further registers VL (variable list), DR (derived rule) and ERL (explanation rule list). Figure 3d illustrates, in flow chart form, a preferred embodiment of the operation of the rule determination unit 12. The input vector VL contains integer values indicating the variables involved. In the example of Fig. 14 the problem is to determine the derived relation between the variables PICKUP and STBY, so VL = 2 4. The relation is determined by testing the validity of all of the combinations of the variables. If the output CRN (contradiction rule number) is 0, the combination is valid, otherwise it is invalid. The four possible combinations are shown in Fig. 14 and the results stored in the derived rule register. The relation may be recognised as a NAND relation; that is, 'system standby' and 'pickup on' will never appear at the same time. By means of CRN, EV, and PS it is easy to make an explanation rule list with all of the rules involved in the inference:

ERL = 1 1, i.e. both rules are involved.

Fig. 15 illustrates the principle of theorem proving, which is based on the derived rule determination technique. The problem is to prove that the predefined rule set implies a user-defined conclusion. In this case, the derived relation between the variables and the conclusion is compared element by element with the binary representation of the conclusion. Given the rule base of Fig. 6, the example is to prove that EITHER the system is at standby OR the pickup is on. The conclusion to prove is an exclusive OR relation between PICKUP and STBY (Fig. 15(a)). The derived relation (Fig. 15(b)) between PICKUP and STBY was proved in the previous example. The theorem C is proved if DR implies C, that is, DR is less than or equal to C for all elements. As may be seen from Fig. 15(c), the condition is not satisfied. Hence, the theorem cannot be proved.

Fig. 16 illustrates abduction. Here the output state vector is known, and the problem is to determine all the input state vectors (premises) implying that conclusion.

This is carried out by a primitive deduction (state vector transformation) of the negated constraint output state vector. Fig. 16 relates to the same rules as Fig. 6, and the output state vector 'PICKUP is false' is given (Fig. 16(a)). This state vector is negated, deduced and negated again (Fig. 16(b)) giving the conclusion:
'No disc', 'turntable not rotating' or 'system is at standby' imply the conclusion 'Pickup is off'.

Alternatively, the abduction process may be carried out without negating the output state vector. In this case, the end user specifies the known output state vector and a set of input variables. The system deduces all combinations of input variables and compares the result of each deduction with the specified output state vector. If the determined and the specified output state vector are equal, a corresponding input state is stored. Hence, the result of this abduction process is the set of input combinations satisfying the output constraint.

It will be seen that the present invention, at least in its described embodiments, provides the following features and advantages: the knowledge base is represented in a compact binary format with each rule transformed to a truth table. The size of the knowledge base is therefore approximately proportional to the number of rules and independent of the number of state variables. Therefore, there is no problem with "combinational explosion". During rule consultation the size of the knowledge base remains fixed.

Also rules may be consulted in any order and therefore the possibility exists of processing rules in parallel, e.g. in a plurality of processors, leading to the possibility of an almost unlimited increase in speed.

The logical transformation is based on a parallel search of binary patterns. The technique can be implemented in any programming language, but it is suitable for implementation in parallel processing hardware. Any switching circuit technology may be a candidate, including electrical, mechanical or optical devices, but obviously a semi-conductor chip implementation is most practical at present. The components of the apparatus described, including the PS memory 1, rule base memory 2, rule base scanning unit 3, and rule consultation unit 5 can if desired, be implemented in a general purpose computer such as a microprocessor and their functions could be readily implemented by the program steps set out in Figs. 3a-d, for example.

The logical transformation is carried out without changing the rule base, in contradiction to the conventional approach in which derived rules are added temporarily during the state search. Therefore, our rule base has a fixed size during inference, which is important when implemented in small-scale microcomputer systems. The logical transformation is usually executed with fewer rule consultations and higher execution speed than conventional inference methods.

In practice, the logical transformation may be carried out as the transformation of a binary state vector representing aspects of a physical entity. The input state vector represents the known or measured system state and the system may interact directly with physical devices such as transducers generating the input state vector. The output is of course a state vector updated in accordance with the input stimuli (the input state vector) and the system constraints (the knowledge base).

The state vector can include tautology (don't care) and contradiction (inconsistency) as state values to be treated like truth and falsehood. Therefore, the system can identify and manipulate inconsistent or superfluous knowledge.

All of the inference methods performed are based on just one fundamental logical transformation. Well known inference methods such as resolution, modus ponens or modus tollens may be carried out straightforwardly by means of this new transformation. Composite and complex inference techniques like derived rule determination or theorem proving may also be executed straightforwardly by two or more state vector transformations using parallel or sequential processing.

This new inference technology makes it possible to introduce artificial intelligence in many important new application areas, including small-scale microcomputer systems for real-time process control.

In one possible form the invention may be embodied in a coprocessor for a microcomputer, or other controller, either as a special-purpose integrated circuit or as a board adapted to be connected to the address and data bus of the computer. Software provision may be made for interfacing the coprocessor with programming languages commonly used in industrial control, such as PASCAL, APL and C, whereby programs written in these languages may call information processing routines in the coprocessor.

Although the invention has been described in connection with variables which have two states, it can be used in systems in which variables can take values over a continuous range. In such a system the ranges may be divided into relatively small sub-ranges, and a value of a variable falling or not within one of the small sub-ranges can be represented in binary form and processed with the techniques described.

Further, the invention can be extended to so-called fuzzy logic systems in which each rule state has a certain probability value, by storing probability values in association with the combinations stored in the rule base memory 2. These values can then be processed during or after the processing of the state vector and rule base information.

**Claims**

1. A signal processing apparatus for reducing the uncertainty of an input signal (SV) which can consist of a plurality of components, comprising:

means (1,2) for storing one or more rules each expressing a relation between a plurality of the components;

means (3,4,5) for receiving said input signal; and

means for determining from the input signal and the rules information about the value of at least one component of the input signal; characterised in that:

each rule is stored in the form of signal representations of sets of combinations of the components involved in the rule, which sets indicate in respect of all combinations of the components involved in the rule whether those combinations are possible;

said receiving means (3,4,5) further comprises means for identifying all rules which contain information about a component of said input signal which is determinate; and in that said apparatus further comprises:

means (5) for identifying combinations consistent with the values of components of the input signal from the respective identified rules; and

means (5) for determining from the identified combinations information about the value of at least one component of the input signal.

**2.** Signal processing apparatus as claimed in claim 1 wherein the components of the input signal (SV) comprise binary representations of aspects of a physical entity.

**3.** Signal processing apparatus as claimed in claim 1 or 2 wherein each component of the input signal (SV) can take one of four values respectively representing two possible states, tautology, and inconsistency.

**4.** Signal processing apparatus as claimed in claim 1, 2 or 3, wherein the means (2) for storing is arranged to store an array of binary codes each representing a combination of said components which is known to be possible.

**5.** Signal processing apparatus as claimed in any preceding claim wherein the means (1,2) for storing further comprises memory means for storing information indicating which of the rules involve individual ones of said components.

**6.** Signal processing apparatus as claimed in claim 5 wherein the means (3, 4, 5) for receiving the input signal and identifying any rules which contain information about a component of said input signal which is determinate comprises a rule list store (4) for storing a list of said rules to be processed, said list being determined on the basis of the input signal and the contents of the memory means (1).

**7.** Signal processing apparatus as claimed in claim 6 including a control register (9) arranged to indicate which component of the input signal has been newly evaluated, and means for determining a new list based additionally on the information in the control register.

**8.** Signal processing apparatus as claimed in claim 6 or 7 arranged repeatedly to process the input signal until the rule list store (4) contains no sets to be processed, or until an inconsistency is detected.

**9.** Signal processing apparatus as claimed in any preceding claim in which the signal representation of sets of combinations comprises binary words with the bits ordered to correspond to the order of the components of the input signal, each component of the input signal comprising two binary bits, said apparatus comprising two registers, one (SV(2)) containing the upper bits of the input signal and one (SV(1)) the lower bits, and including means (5,2) to OR a binary word with the contents of one register and to OR the complement of the word with the contents of the other.

**10.** Signal processing apparatus as claimed in any preceding claim including register means (7) for storing an indication of which rule led to the determination of each value of the input signal.

**11.** Signal processing apparatus as claimed in any preceding claim wherein the storing means (1,2), receiving and identifying means (3,4), identifying means and determining means (5) are formed by a suitably programmed computer.

**12.** Signal processing apparatus as claimed in any preceding claim in the form of a coprocessor for a computer.

**13.** Apparatus as claimed in any preceding claim, further comprising:

a rule memory (2) arranged to store binary words indicating whether or not all of the combinations of the components of each rule are allowable, said words including bits representing the respective components in the combinations;

a control memory (1) arranged to store respective binary words for each rule with the bits of each word indicating whether a particular component is involved in the corresponding rule, the order of the components associated with the rule memory words being the same as that of the control memory words; and

addressing means for providing access to each rule memory binary word of a particular rule in response to an output of the control memory indicating that the particular rule is required.

**14.** A signal processing method for reducing the uncertainty of an input signal (SV) which can consist of a plurality of components each representative of an aspect of a physical entity, comprising:

storing one or more rules each expressing a relation between a plurality of the components; and
determining from the input signal and the rules the value of an indefinite component of the input signal;

characterised by:

storing each rule in the form of signal representations of sets of combinations of the components involved in the rule, which sets indicate in respect of all combinations of the components involved in the rule whether those combinations are possible;
identifying all rules which contain information about a component of said input signal which is determinate;
identifying combinations consistent with the values of the components of the input signal from the respective identified rules; and
determining from the identified combinations the value of an indefinite component of the input signal.

**15.** A method as claimed in claimed in claim 14, further comprising:

storing the input signal in register means as a plurality of two-bit pairs each corresponding to a component of the input signal; and wherein:
said step of storing a signal representation of sets of combinations of said components comprises storing said signal representation in the form of binary words representing all of the allowable combinations of the components in the rules taken separately, the variables in the rule words being ordered in the same manner as in the input signal, all of the first bits of the pairs being taken as a first signal component and the second bits as a second signal component; the method further comprising:
combining the input signal and the stored rule information to provide an output signal by combining in an OR relation a rule binary word with one of the first and second signal components, and combining-in an OR relation the complement of the binary word with the other of the first and second signal components; and
storing the resulting combinations in register means as an output signal.

**16.** A method as claimed in claim 14, further comprising:

converting each rule to a plurality of first binary words indicating whether or not all of the combinations of the components in each rule are allowable and a second plurality of binary words each corresponding to a rule and indicating which components are involved in that rule, individual bits in the first and second words corresponding to individual components ordered in the same order in all the first and second words;
taking data containing known values of at least one of said components;
identifying from the second words any rule involving the known component or components; and
selecting the first words corresponding to the identified rules and using the selected words to determine the value of at least one other component.

**17.** A method as claimed in claim 16 wherein the first words represent the rules in positive index form such that they contain all of the allowable combinations of the components involved in the respective rules.

**Patentansprüche**

**1.** Vorrichtung zur Signalverarbeitung zur Minderung der Ungenauigkeit eines Eingangssignals (SV), das eine Mehrzahl von Komponenten aufweisen kann, welche aufweist:

Mittel (1 , 2) zur Speicherung einer oder mehrerer Regeln, die jeweils eine Beziehung zwischen einer Mehrzahl der Komponenten ausdrücken,

Mittel (3, 4, 5) zum Empfang des genannten Eingangssignals,

Mittel zum Bestimmen einer Information hinsichtlich des Wertes mindestens einer Komponente des Eingangssignals aus dem Eingangssignal und den Regeln,

**dadurch gekennzeichnet,** daß

jede Regel in Form von Signaldarstellungen von Sätzen von Kombinationen der in die Regel einbezogenen Komponenten gespeichert wird, wobei die Sätze bezüglich aller Kombinationen der in die Regel einbezogenen Komponenten angeben, ob jene Kombinationen möglich sind,

die Empfangsmittel (3, 4, 5) weiter Mittel zur Identifizierung aller Regeln aufweisen, welche eine Information hinsichtlich einer Komponente des Eingangssignals enthält, welche bestimmt ist,

und daß die Vorrichtung weiter aufweist:

Mittel (5) zur Identifizierung von mit den Werten der Komponenten des Eingangssignals konsistenten Kombinationen aus den jeweils identifizierten Regeln und

Mittel (5) zur Gewinnung von Information hinsichtlich des Wertes mindestens einer Komponente des Eingangssignals aus den identifizierten Kombinationen.

**2.** Signalverarbeitungsvorrichtung nach Anspruch 1, dadurch gekennzeichnet, daß die Komponenten des Eingangssignals Binärdarstellungen von Aspekten einer physikalischen Größe enthalten.

**3.** Signalverarbeitungsvorrichtung nach Anspruch 1 oder 2, dadurch gekennzeichnet, daß jede Komponente des Eingangssignals einen der vier Werte annehmen kann, die jeweils zwei mögliche Zustände, Tautologie und Widerspruch, darstellen.

**4.** Signalverarbeitungsvorrichtung nach Anspruch 1, 2 oder 3, dadurch gekennzeichnet, daß die Speichermittel so ausgebildet sind, daß eine reguläre Anordnung von Binärcodes gespeichert wird, die jeweils eine Kombination besagter Komponenten darstellen, von der bekannt ist, daß sie möglich ist.

**5.** Signalverarbeitungsvorrichtung nach einem der Ansprüche 1, 2, 3 oder 4, dadurch gekennzeichnet, daß die Speichermittel (1, 2) weiter eine Speichereinrichtung zur Speicherung von Informationen aufweisen, die angeben, weiche der Regeln einzelne der genannten Komponenten erfassen.

**6.** Signalverarbeitungsvorrichtung nach Anspruch 5, dadurch gekennzeichnet, daß die Mittel (3, 4, 5) zum Empfang des Eingangssignals und zur Identifizierung einer Regel, die Informationen über eine Komponente des Eingangssignals enthält, welche bestimmt ist, einen Regellistenspeicher zur Speicherung einer Liste der zu verarbeitenden Regeln umfassen, wobei die Liste auf der Grundlage des Eingangssignal und des Inhalts der Speichereinrichtung bestimmt ist.

**7.** Signalverarbeitungsvorrichtung nach Anspruch 6, gekennzeichnet durch ein Steuerregister (9), das angibt, welche Komponente des Eingangssignals neu berechnet wurde, und durch ein Mittel zur Bestimmung einer neuen Liste, die zusätzlich auf der Information im Steuerregister basiert.

**8.** Signalverarbeitungsvorrichtung nach Anspruch 6 oder 7, die so ausgebildet ist, daß das Eingangssignal mehrfach verarbeitet wird, bis der Regellistenspeicher keine zu verarbeitenden Regeln mehr enthält oder ein Widerspruch festgestellt wird.

**9.** Signalverarbeitungsvorrichtung nach einem der vorangehenden Ansprüche, dadurch gekennzeichnet, daß die Signaldarstellung von Kombinationen-Sätzen Binärworte enthält, wobei die Bits entsprechend der Reihenfolge der Komponenten des Eingangssignals angeordnet sind, jede Komponente des Eingangssignals aus zwei Binärbits besteht und die Vorrichtung zwei Register umfaßt, von denen das eine (SV(1)) die oberen Bits des Eingangssignals und das andere (SV(2)) die unteren Bits enthält, und Mittel (5, 2) zur ODER-Verknüpfung eines Binärwortes mit dem Inhalt des einen Registers und zur ODER-Verknüpfung des Wortkomplements mit dem Inhalt des anderen vorgesehen sind.

**10.** Signalverarbeitungsvorrichtung nach einem der vorangehenden Ansprüche, gekennzeichnet durch Registermittel (7) zur Speicherung eines Hinweises darauf, welche Regel zur Bestimmung jedes Wertes des Eingangssignals geführt hat.

**11.** Signalverarbeitungsvorrichtung nach einem der vorangehenden Ansprüche, dadurch gekennzeichnet, daß die Speichermittel (1, 2), die Empfangs- und Identifizierungsmittel (3, 4), die Identifizierungsmittel und die Bestimmungsmittel (5) durch einen angemessen programmierten Computer gebildet sind.

**12.** Signalverarbeitungsvorrichtung nach einem der vorangehenden Ansprüche, dadurch gekennzeichnet, daß die Vorrichtung in Form eines Koprozessors für einen Computer ausgeführt ist.

**13.** Signalverarbeitungsvorrichtung nach einem der vorangehenden Ansprüche, die weiter aufweist:

einen Regelspeicher (2) zur Speicherung von Binärworten, welche angeben, ob alle der Kombinationen der Komponenten jeder Regel erlaubt sind, wobei die Worte Bits umfassen, die die jeweiligen Komponenten in den Kombinationen darstellen,

einen Steuerspeicher (1) zur Speicherung der jeweiligen Binärwörter für jede Regel, wobei die Bits jedes Wortes angeben, ob eine bestimmte Komponente in die entsprechende Regel einbezogen ist, und die Reihenfolge der Komponenten der zugehörigen Regelspeicherworte mit jener der Steuerspeicherworte übereinstimmt, und

Adressierungsmittel, die den Zugriff zu jedem Regelspeicherbinärwort einer bestimmten Regel im Ansprechen auf einen Ausgang des Steuerspeichers ermöglicht, welcher angibt, daß die spezielle Regel erforderlich ist.

**14.** Verfahren zur Signalverarbeitung zur Minderung der Ungenauigkeit eines Eingangssignals (SV), das aus einer Mehrzahl von Komponenten bestehen kann, die jeweils einen Aspekt einer physikalischen Größe darstellen, das aufweist:

das Speichern einer oder mehrerer Regeln, die jeweils eine Beziehung zwischen einer Mehrzahl der Komponenten ausdrücken,

das Bestimmen des Wertes einer unbestimmten Komponente des Eingangssignals aus dem Eingangssignal und den Regeln,

gekennzeichnet durch

das Speichern jeder Regel in Form von Signaldarstellungen von Sätzen von Kombinationen der in die Regel einbezogenen Komponenten, wobei die Sätze hinsichtlich aller Kombinationen der in die Regel einbezogenen Komponenten angeben, ob jene Kombinationen möglich sind,

das Identifizieren aller Regeln, die Information hinsichtlich einer Komponente des Eingangssignals enthalten, welche bestimmt ist,

das Identifizieren von mit den Werten der Komponenten des Eingangssignals konsistenten Kombinationen aus den jeweils identifizierten Regeln und

das Bestimmen des Wertes der unbestimmten Komponente des Eingangssignals aus den identifizierten Kombinationen.

**15.** Verfahren nach Anspruch 14, das weiter umfaßt:

das Speichern des Eingangssignals in Registermitteln als eine Mehrzahl von Zwei-Bit-Paaren, von denen jedes einer Komponente im Eingangssignal entspricht,

wobei der Schritt des Speicherns einer Signaldarstellung von Sätzen von Kombinationen der Komponenten das Speichern der Signaldarstellung in Form von Binärworten umfaßt, welche alle erlaubten Kombinationen von Komponenten in den Regeln, für sich genommen, aufweist und die Variablen in den Regelworten auf dieselbe Weise wie im Eingangssignal geordnet sind, sämtliche ersten Bits der Paare als eine erste Signalkomponente und die zweiten Bits als zweite Signalkomponente genommen werden, und das Verfahren weiter aufweist

das Kombinieren des Eingangssignals und der gespeicherten Regelinformation zur Bereitstellung eines Ausgangssignals durch Kombinieren in einer ODER-Verknüpfung eines Regelbinärwortes mit einer der ersten und zweiten Signalkomponente und Kombinieren in einer ODER-Verknüpfung des Komplements des Binärwortes mit der anderen der ersten und zweiten Signalkomponente und

das Speichern der daraus resultierenden Kombinationen in Registermitteln als Ausgangssignal.

**16.** Verfahren nach Anspruch 14, das weiter umfaßt:

das Umwandeln jeder Regel in eine Mehrzahl von ersten Binärworten, die angeben, ob alle Kombinationen von Komponenten in jeder Regel zulässig sind oder nicht, und in eine zweite Mehrzahl von Binärworten, die jeweils einer Regel entsprechen und angeben, welche Komponenten in jene Regel einbezogen sind, wobei einzelne Bits in den ersten und zweiten Worten einzelnen Komponenten entsprechen, die in allen ersten und zweiten Worten in gleicher Reihenfolge angeordnet sind,

das Aufnehmen von Daten, die bekannte Werte von zumindest einer der genannten Komponenten enthalten,

das Identifizieren einer Regel aus den zweiten Worten, in die die bekannte Komponente oder Komponenten einbezogen ist/sind, und

das Auswählen der ersten Worte, die den identifizierten Regeln entsprechen, und das Benutzen der ausgewählten Worte zur Bestimmung des Wertes mindestens einer anderen Komponente.

**17.** Verfahren nach Anspruch 16, dadurch gekennzeichnet, daß die ersten Worte die Regeln in positiver Indexform darstellen, so daß sie alle in den jeweiligen Regeln einbezogenen erlaubten Kombinationen von Komponenten enthalten.

**Revendications**

1. Appareil de traitement de signal pour réduire l'incertitude d'un signal d'entrée (SV) qui peut consister en une pluralité de composantes, comprenant :

   un moyen (1, 2) pour stocker une ou plusieurs règles exprimant chacune une relation entre une pluralité des composantes ;
   un moyen (3, 4, 5) pour recevoir ledit signal d'entrée ; et
   un moyen pour déterminer, à partir du signal d'entrée et des règles, une information sur la valeur d'au moins une composante du signal d'entrée ;

   caractérisé en ce que :

   chaque règle est stockée sous la forme de représentations de signal de séries de combinaisons des composantes mises en oeuvre dans la règle, ces séries indiquant, par rapport à toutes les combinaisons des composantes mises en oeuvre dans la règle, si ces combinaisons sont possibles ;
   ledit moyen de réception (3, 4, 5) comprenant en outre un moyen pour identifier toutes les règles qui contiennent une information sur une composante dudit signal d'entrée qui est déterminée ; et en ce que ledit appareil comporte en outre :
   un moyen (5) pour identifier des combinaisons cohérentes avec les valeurs des composantes du signal d'entrée à partir des règles respectives identifiées ; et
   un moyen (5) pour déterminer, à partir des combinaisons identifiées, une information sur la valeur d'au moins une composante du signal d'entrée.

2. Appareil de traitement de signal selon la revendication 1, dans lequel les composantes du signal d'entrée (SV) comprennent des représentations binaires d'aspects d'une entité physique.

3. Appareil de traitement de signal selon la revendication 1 ou 2, dans lequel chaque composante du signal d'entrée (SV) peut prendre l'une de quatre valeurs représentant respectivement deux états possibles, tautologie, et incohérence.

4. Appareil de traitement de signal selon la revendication 1, 2 ou 3, dans lequel le moyen (2) de stockage est agencé pour stocker un réseau de codes binaires représentant chacun une combinaison desdites composantes qui est connue comme étant possible.

5. Appareil de traitement de signal selon l'une quelconque des revendications précédentes, dans lequel le moyen (1, 2) de stockage comprend en outre un moyen formant mémoire pour stocker une information indiquant lesquelles parmi les règles mettent en oeuvre des composantes individuelles parmi lesdites composantes.

6. Appareil de traitement de signal selon la revendication 5, dans lequel le moyen (3, 4, 5) pour recevoir le signal d'entrée et identifier des règles quelconques qui contiennent une information sur une composante dudit signal d'entrée qui est déterminée, comprend une mémoire (4) de liste de règles pour stocker une liste desdites règles à traiter, ladite liste étant déterminée sur la base du signal d'entrée et du contenu du moyen (1) formant mémoire.

7. Appareil de traitement de signal selon la revendication 6, comportant un registre (9) de commande agencé pour indiquer quelle composante du signal d'entrée a été nouvellement évaluée, et un moyen pour déterminer une nouvelle liste sur la base, en outre, de l'information contenue dans le registre de commande.

8. Appareil de traitement de signal selon la revendication 6 ou 7, agencé de manière répétitive pour traiter le signal d'entrée jusqu'à ce que la mémoire (4) de liste de règles ne contienne aucune série à traiter, ou jusqu'à ce qu'une incohérence soit détectée.

9. Appareil de traitement de signal selon l'une quelconque des revendications précédentes, dans lequel la représentation de signal de séries de combinaisons comprend des mots binaires avec les bits ordonnés pour correspondre à l'ordre des composantes du signal d'entrée, chaque composante du signal d'entrée comprenant deux bits binaires, ledit appareil comprenant deux registres, l'un (SV(2)) contenant les bits supérieurs du signal d'entrée, et l'autre (SV(1)) les bits inférieurs, et comportant un moyen (5, 2) pour effectuer une opération OU sur un mot binaire avec le contenu d'un registre et pour effectuer une opération OU sur le complément du mot avec le contenu de l'autre.

10. Appareil de traitement de signal selon l'une quelconque des revendications précédentes, comportant un moyen (7) formant registre pour stocker une indication sur quelle règle conduit à la détermination de chaque valeur du signal d'entrée.

11. Appareil de traitement de signal selon l'une quelconque des revendications précédentes dans lequel le moyen de stockage (1, 2), le moyen de réception et d'identification (3, 4), le moyen d'identification et le moyen de détermination (5) sont formés par un ordinateur programmé de manière appropriée.

**12.** Appareil de traitement de signal selon l'une quelconque des revendications précédentes, se présentant sous la forme d'un coprocesseur pour un ordinateur.

**13.** Appareil selon l'une quelconque des revendications précédentes, comprenant en outre :

> une mémoire (2) de règle agencée pour stocker des mots binaires indiquant si toutes les combinaisons des composantes de chaque règle sont permises ou non, lesdits mots comportant des bits représentant les composantes respectives dans les combinaisons ;
> une mémoire (1) de commande agencée pour stocker des mots binaires respectifs pour chaque règle, les bits de chaque mot indiquant si une composante particulière est mise en oeuvre dans la règle correspondante, l'ordre des composantes associées aux mots de la mémoire de règle étant le même que celui des mots de mémoire de commande ; et
> un moyen d'adressage pour fournir l'accès à chaque mot binaire de mémoire de règle d'une règle particulière en réponse à une sortie de la mémoire de commande indiquant que la règle particulière est nécessaire.

**14.** Procédé de traitement de signal pour réduire l'incertitude d'un signal d'entrée (SV) qui peut consister en une pluralité de composantes représentatives chacune d'un aspect d'une entité physique, comprenant :

> le stockage d'une ou plusieurs règles exprimant chacune une relation entre une pluralité des composantes ; et
> la détermination, à partir du signal d'entrée et des règles, de la valeur d'une composante indéfinie du signal d'entrée ;

caractérisé par :

> le stockage de chaque règle sous la forme de représentations de signal de séries de combinaisons des composantes mises en oeuvre dans la règle, ces séries indiquant, par rapport à toutes les combinaisons des composantes mises en oeuvre dans la règle, si ces combinaisons sont possibles ;
> l'identification de toutes les règles qui contiennent une information concernant une composante dudit signal d'entrée qui est déterminée ;
> l'identification de combinaisons cohérentes avec les valeurs des composantes du signal d'entrée à partir des règles identifiées respectives ; et
> la détermination, à partir des combinaisons identifiées, de la valeur d'une composante indéfinie du signal d'entrée.

**15.** Procédé selon la revendication 14, comprenant en outre :

> le stockage du signal d'entrée dans un moyen formant registre sous la forme d'une pluralité de paires de deux bits correspondant chacune à une composante du signal d'entrée ; et dans lequel :
> ladite étape de stockage d'une représentation de signal de séries de combinaisons desdites composantes comprend le stockage de ladite représentation de signal sous la forme de mots binaires représentant toutes les combinaisons possibles des composantes dans les règles prises séparément, les variables dans les mots de la règle étant ordonnées de la même manière que dans le signal d'entrée, tous les premiers bits des paires étant pris sous la forme d'une première composante de signal et les deuxièmes bits sous la forme d'une deuxième composante de signal ; le procédé comprenant en outre :
> la combinaison du signal d'entrée et de l'information de règle stockée pour obtenir un signal de sortie en combinant dans une relation OU un mot binaire de règle avec l'une des première et deuxième composantes de signal, et en combinant dans une relation OU le complément du mot binaire avec l'autre des première et deuxième composantes de signal ; et
> le stockage des combinaisons résultantes dans un moyen formant registre sous la forme d'un signal de sortie.

**16.** Procédé selon la revendication 14, comprenant en outre :

> la conversion de chaque règle en une pluralité de premiers mots binaires indiquant si toutes les combinaisons des composantes dans chaque règle sont permises ou non et une deuxième pluralité de mots binaires correspondant chacun à une règle et indiquant quelles composantes sont mises en oeuvre dans cette règle, des bits individuels dans les premier et deuxième mots correspondant à des composantes individuelles ordonnées dans le même ordre dans tous les premier et deuxième mots ;
> la saisie de données contenant des valeurs connues d'au moins l'une desdites composantes ;
l'identification, à partir des deuxièmes mots, d'une règle quelconque mettant en oeuvre la composante ou les composantes connue(s) ; et
la sélection des premiers mots correspondant aux règles identifiées et l'utilisation des mots sélectionnés pour déterminer la valeur d'au moins une autre composante.

**17.** Procédé selon la revendication 16, dans lequel les premiers mots représentent les règles sous forme d'index positifs de telle sorte qu'ils contiennent toutes les combinaisons permises des composantes mises en oeuvre dans les règles respectives.

FIG.1

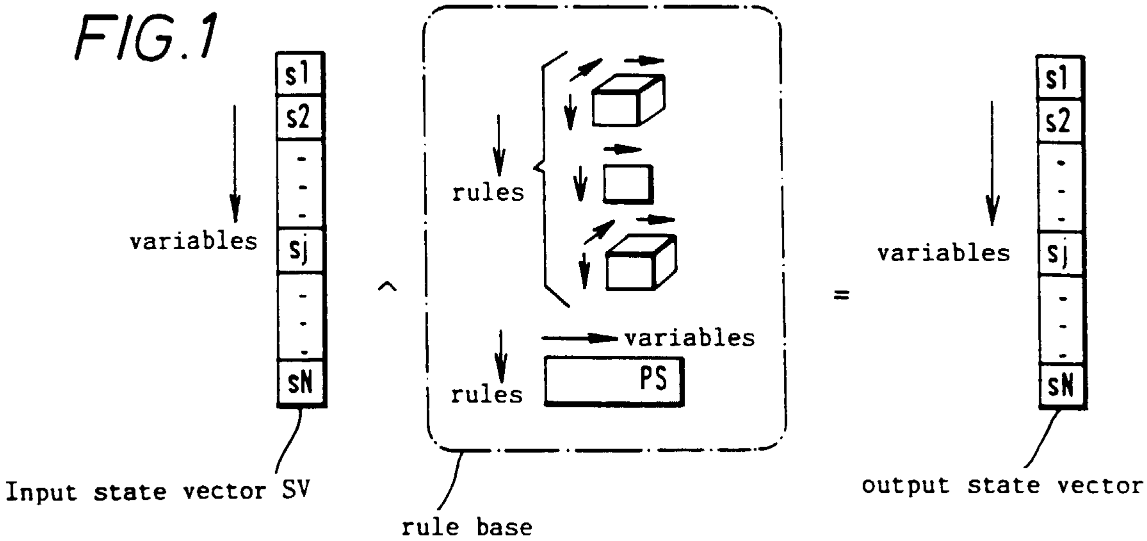


FIG.2

(a) ARRAYFORM (ALL COMBINATIONS):

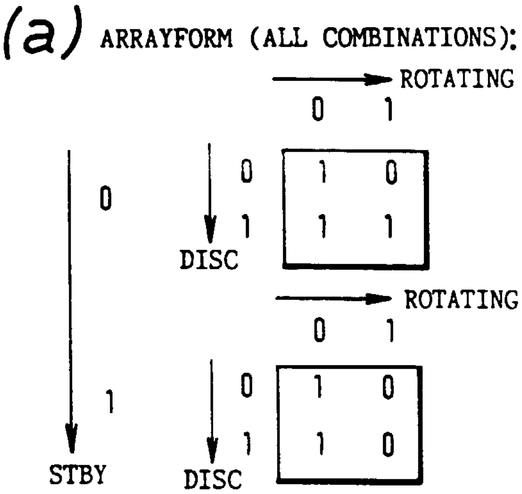


(b) INDEX FORM (LEGAL COMBINATIONS):

| STBY | DISC | ROTATING |
|---|---|---|
| 0 | 0 | 0 |
| 0 | 1 | 0 |
| 0 | 1 | 1 |
| 1 | 0 | 0 |
| 1 | 1 | 0 |

(c) INDEX FORM (ILLEGAL COMBINATIONS):

| STBY | DISC | ROTATING |
|---|---|---|
| 0 | 0 | 1 |
| 1 | 0 | 1 |
| 1 | 1 | 1 |

FIG. 3

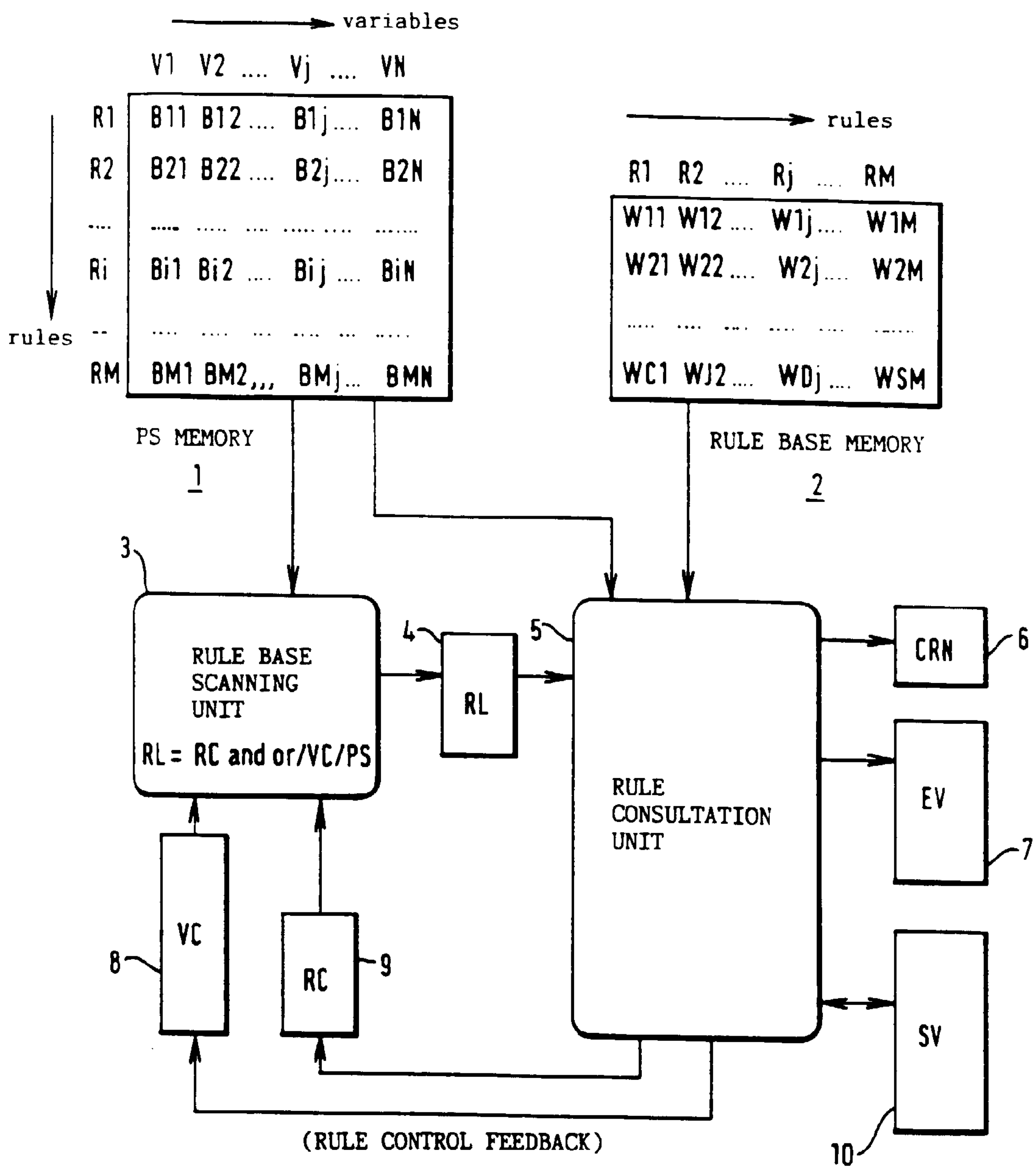


Input registers: SV (state vector ), VC (variable control), RC (rule control)

Output registers: SV, EV (explanation vector), CRN (contradiction rule number)

Buffer register: RL (rule list)

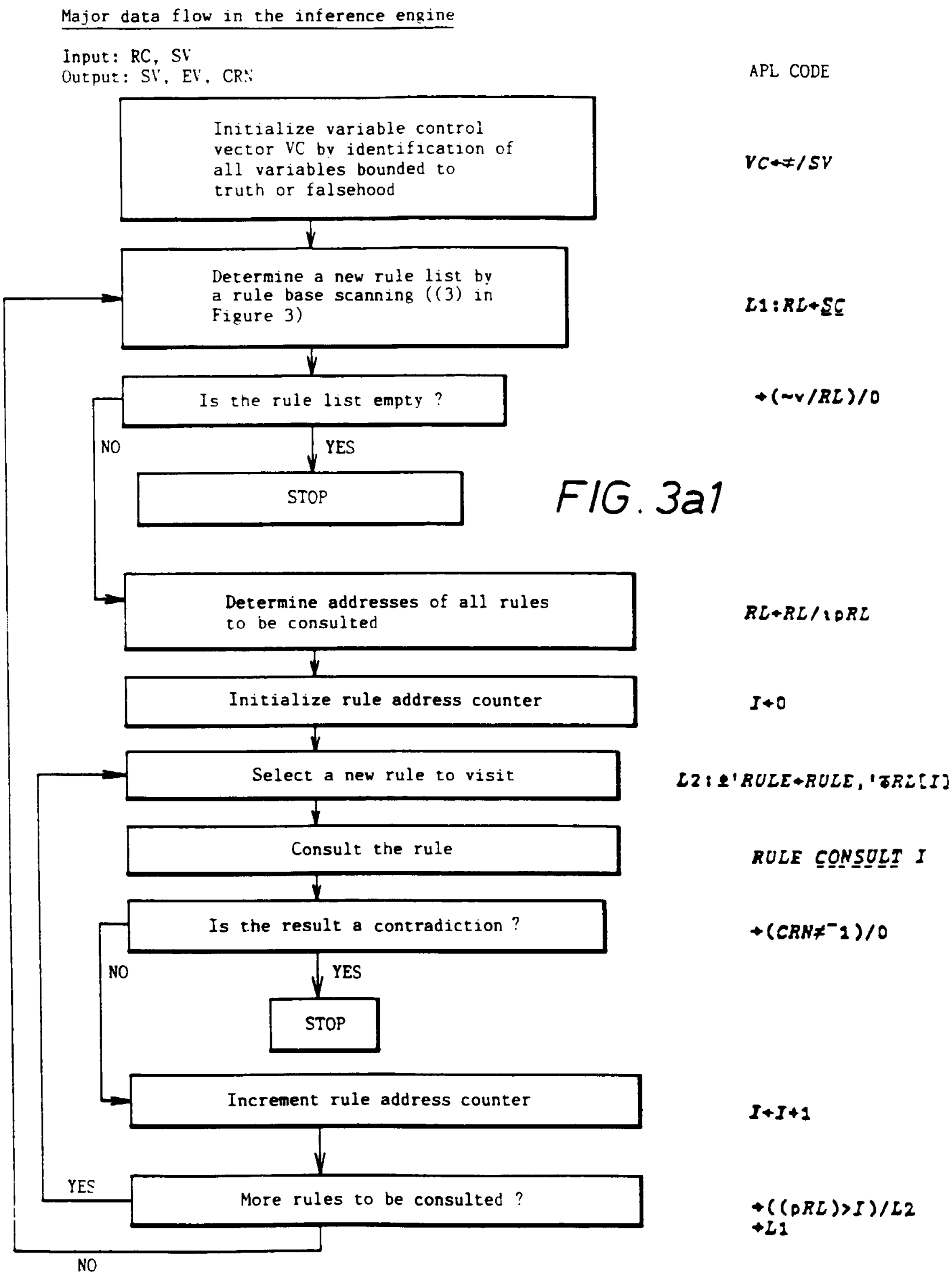
Major data flow in the inference engine
Input: RC, SV
Output: SV, EV, CRN
APL CODE
Initialize variable control vector VC by identification of all variables bounded to truth or falsehood
VC←≠/SV
Determine a new rule list by a rule base scanning ((3) in Figure 3)
L1:RL←SC
Is the rule list empty ?
→(~∨/RL)/0
NO
YES
STOP
Determine addresses of all rules to be consulted
RL←RL/ιρRL
Initialize rule address counter
I←0
Select a new rule to visit
L2:⍎'RULE←RULE,'⍕RL[I]
Consult the rule
RULE CONSULT I
Is the result a contradiction ?
→(CRN≠¯1)/0
NO
YES
STOP
Increment rule address counter
I←I+1
YES
More rules to be consulted ?
→((ρRL)>I)/L2
→L1
NO

FIG. 3a1

FIG. 3a2

APL-function DEDUCT:

```
        ∇DEDUCT[⎕]∇
        ∇ SV2←RC DEDUCT SV;VC;I;RULE;RL;CRN
[1]     VC←≠/SV
[2]    L1:RL←SC
[3]     →(~∨/RL)/0
[4]     RL←RL/⍳⍴RL
[5]     I←0
[6]    L2:⍎'RULE←RULE,'⍕RL[I]
[7]     RULE CONSULT I
[8]     →(CRN≠¯1)/0
[9]     I←I+1
[10]    →((⍴RL)>I)/L2
[11]    →L1
        ∇
```

# FIG. 3b

The rule base scanning unit (3)

Input: RC, VC, PS
Output: RL

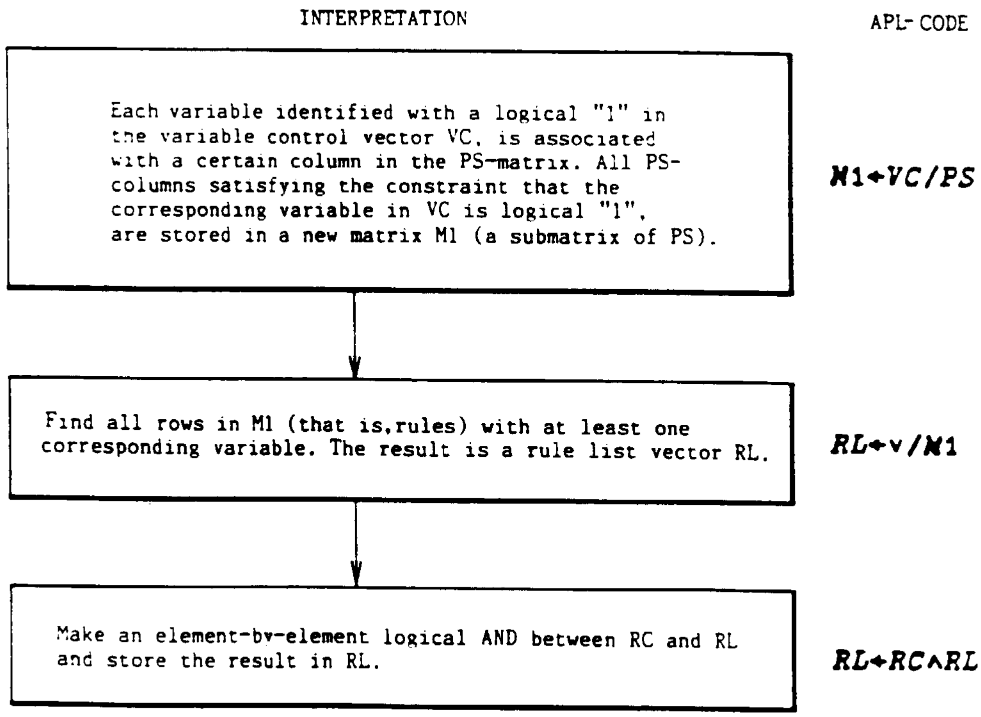


APL-function SC:

```
      ∇SC[⎕]∇
      ∇ RL←SC
[1]   RL←RC∧∨/VC/PS
      ∇
```

FIG. 3c1

The rule consultation unit (5)

Input: SV, I (rule index), PS, and the current rule in positive index form extended with an I/O header.

Output: SV, EV, CRN, RC, VC.

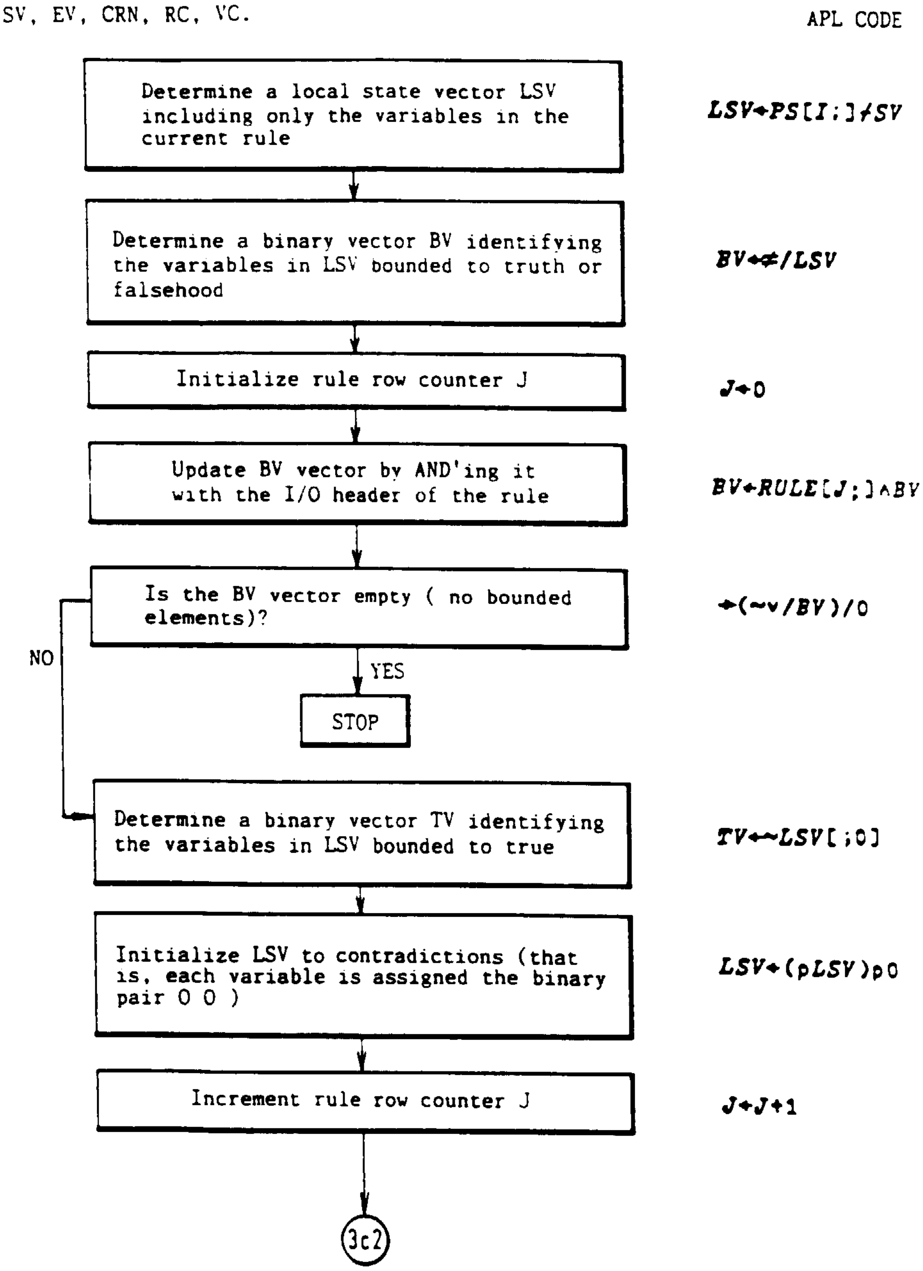

FIG. 3c2

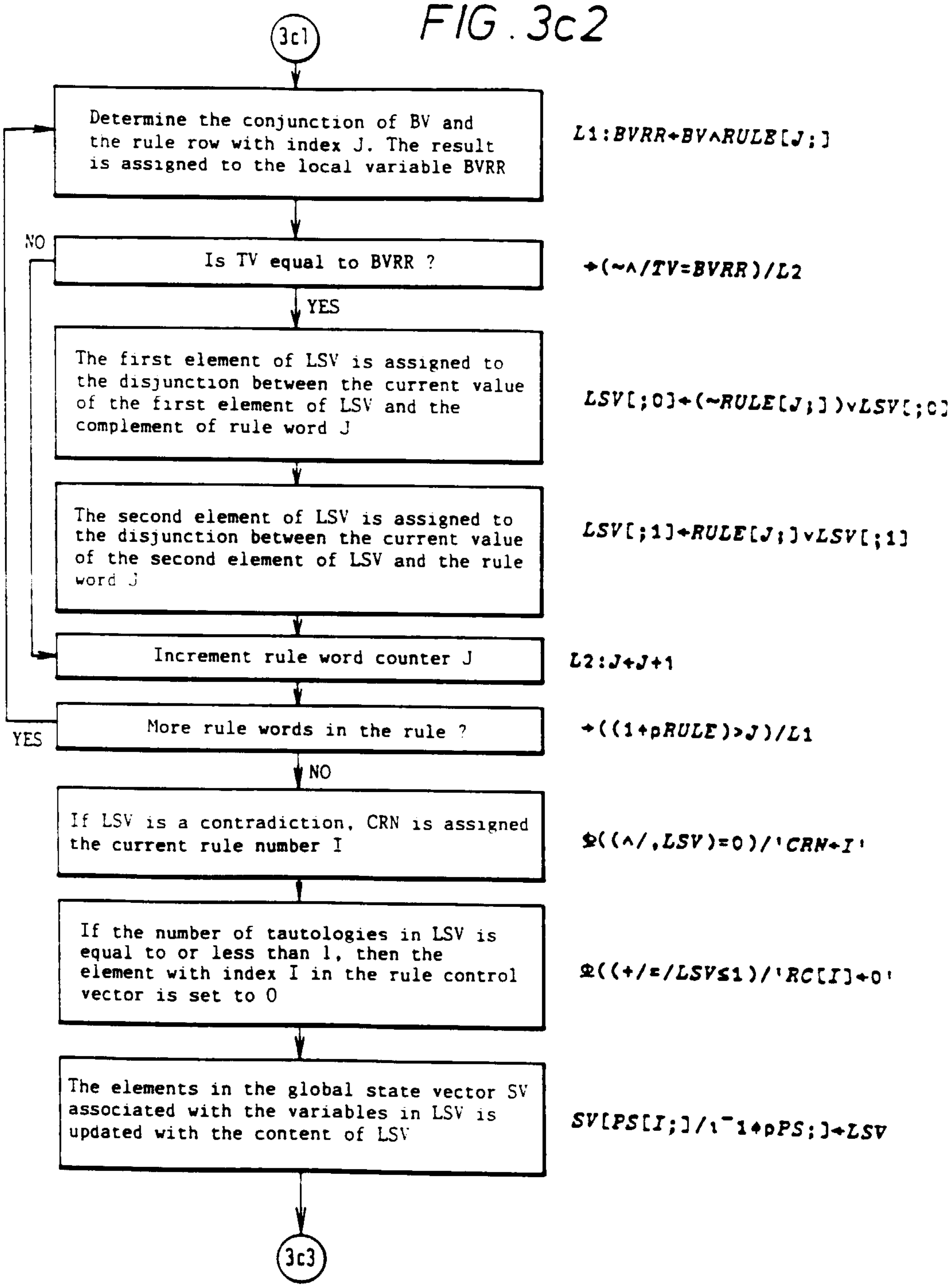
3c1
Determine the conjunction of BV and the rule row with index J. The result is assigned to the local variable BVRR
L1:BVRR←BV∧RULE[J;]
NO
Is TV equal to BVRR ?
→(~∧/TV=BVRR)/L2
YES
The first element of LSV is assigned to the disjunction between the current value of the first element of LSV and the complement of rule word J
LSV[;0]←(~RULE[J;])∨LSV[;0]
The second element of LSV is assigned to the disjunction between the current value of the second element of LSV and the rule word J
LSV[;1]←RULE[J;]∨LSV[;1]
Increment rule word counter J
L2:J←J+1
YES
More rule words in the rule ?
→((1↑ρRULE)>J)/L1
NO
If LSV is a contradiction, CRN is assigned the current rule number I
⍎((∧/,LSV)=0)/'CRN←I'
If the number of tautologies in LSV is equal to or less than 1, then the element with index I in the rule control vector is set to 0
⍎((+/≠/LSV≤1)/'RC[I]←0'
The elements in the global state vector SV associated with the variables in LSV is updated with the content of LSV
SV[PS[I;]/ι¯1↑ρPS;]←LSV
3c3

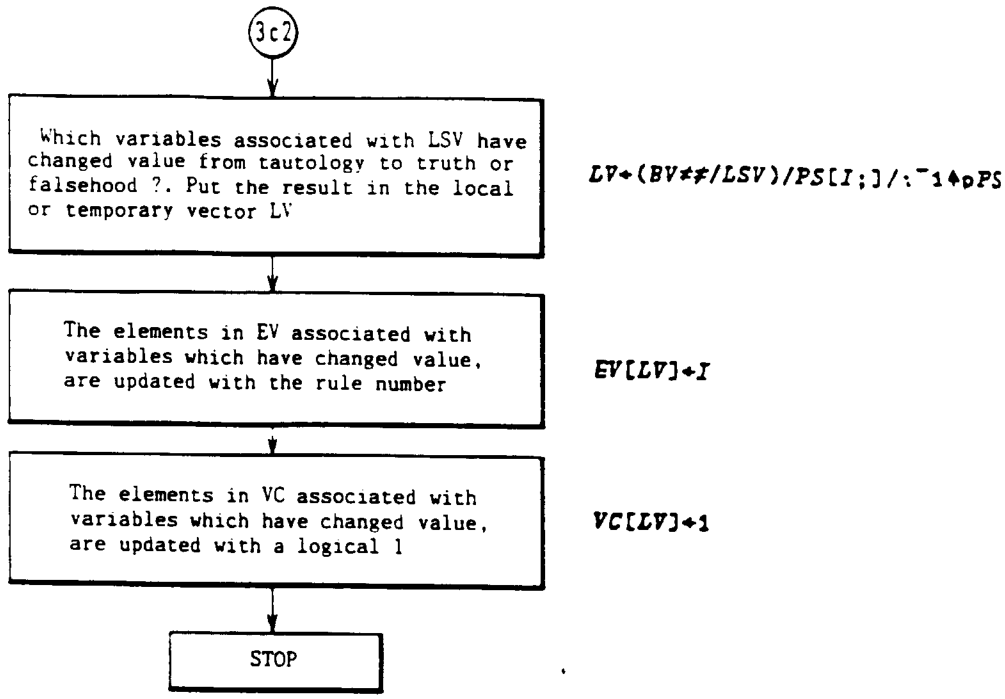


FIG.3c3

APL-function CONSULT:

```
      ∇CONSULT[⎕]∇
      ∇ RULE CONSULT I;J;LSV;BV;TV;BVRR;LV
[1]   LSV←PS[I;]⌿SV
[2]   BV←≠/LSV
[3]   J←0
[4]   BV←RULE[J;]∧BV
[5]   →(~∨/BV)/0
[6]   TV←~LSV[;0]
[7]   LSV←(⍴LSV)⍴0
[8]   J←J+1
[9]  L1:BVRR←BV∧RULE[J;]
[10]  →(~∧/TV=BVRR)/L2
[11]  LSV[;0]←(~RULE[J;])∨LSV[;0]
[12]  LSV[;1]←RULE[J;]∨LSV[;1]
[13] L2:J←J+1
[14]  →((1↑⍴RULE)>J)/L1
[15]  ⍎((∧/,LSV)=0)/'CRN←I'
[16]  ⍎((+/=/LSV≤1)/'RC[I]←0'
[17]  SV[PS[I;]/⍳¯1↑⍴PS;]←LSV
[18]  LV←(BV≠≠/LSV)/PS[I;]/⍳¯1↑⍴PS
[19]  EV[LV]←I
[20]  VC[LV]←1
      ∇
```

The rule determination unit (12)

Input: RC, VL (the variable list VL is an integer vector with the state vector indices of the selected variables).

Output: DR, ERL

FIG.3d1

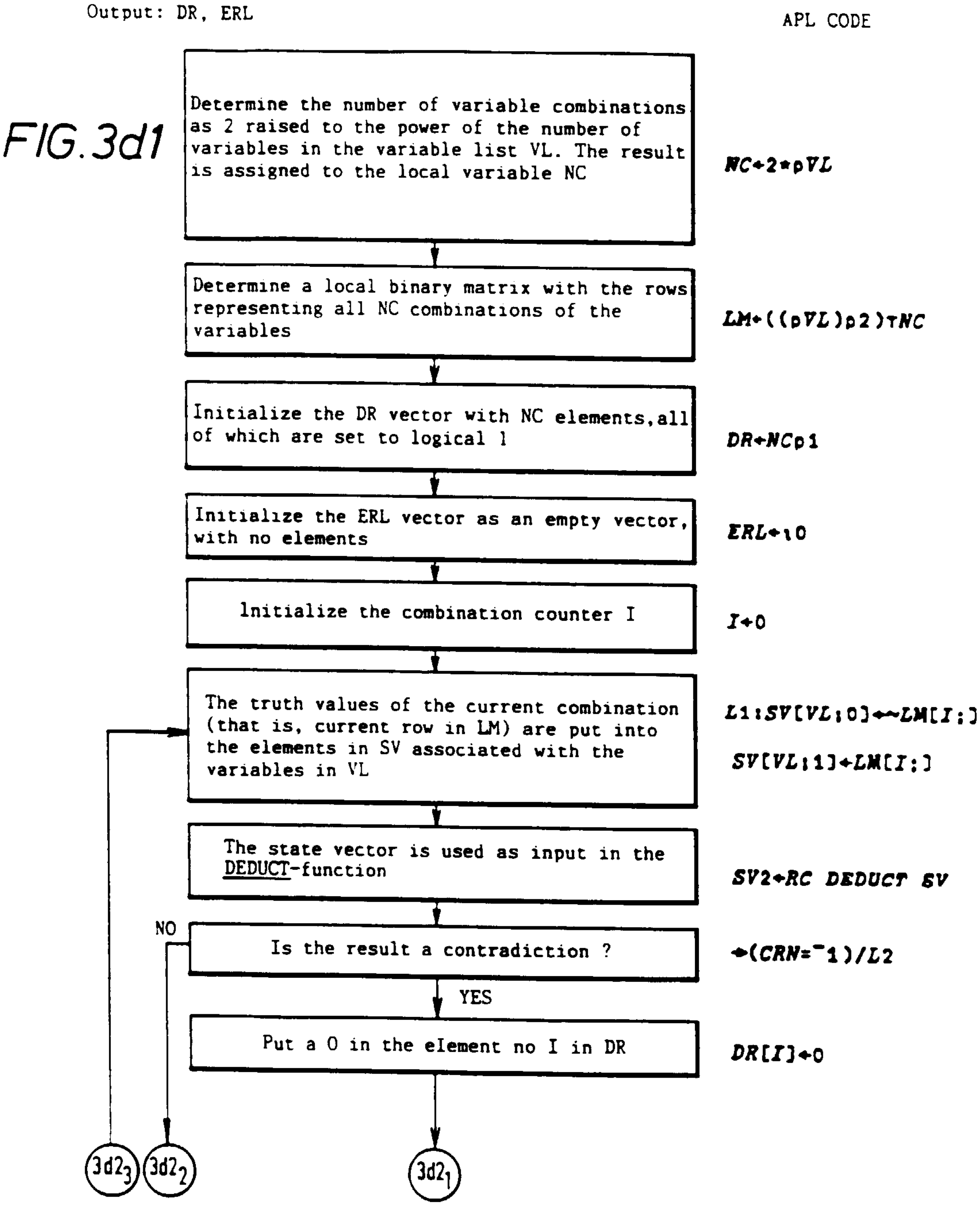

FIG. 3d2

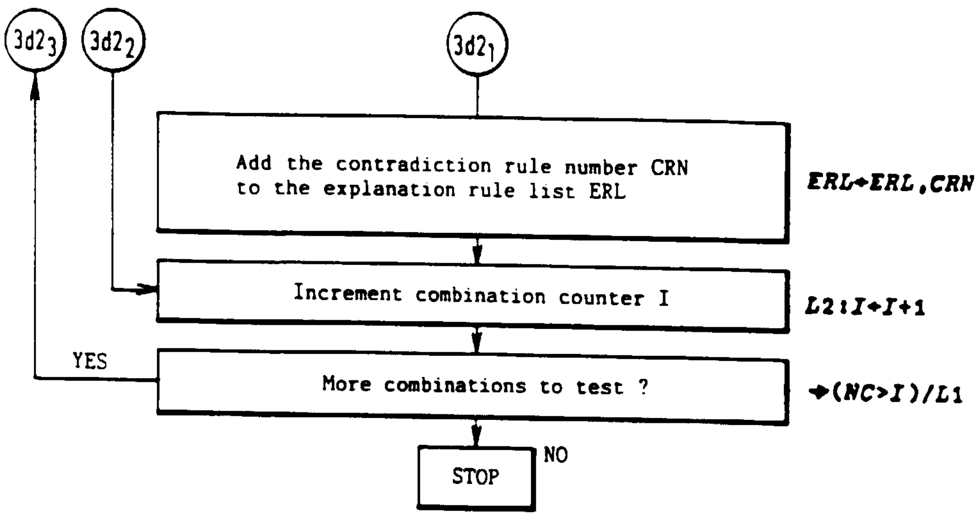


APL-function RULEDET:

```
      ∇RULEDET[⎕]∇
      ∇ RC RULEDET VL;NC;LN;I;SV2
[1]     NC←2*⍴VL
[2]     LN←((⍴VL)⍴2)⊤NC
[3]     DR←NC⍴1
[4]     ERL←⍳0
[5]     I←0
[6]   L1:SV[VL;0]←∼LN[I;]
[7]     SV[VL;1]←LN[I;]
[8]     SV2←RC DEDUCT SV
[9]     →(CRN=¯1)/L2
[10]    DR[I]←0
[11]    ERL←ERL,CRN
[12]  L2:I←I+1
[13]    →(NC>I)/L1
      ∇
```

FIG. 4

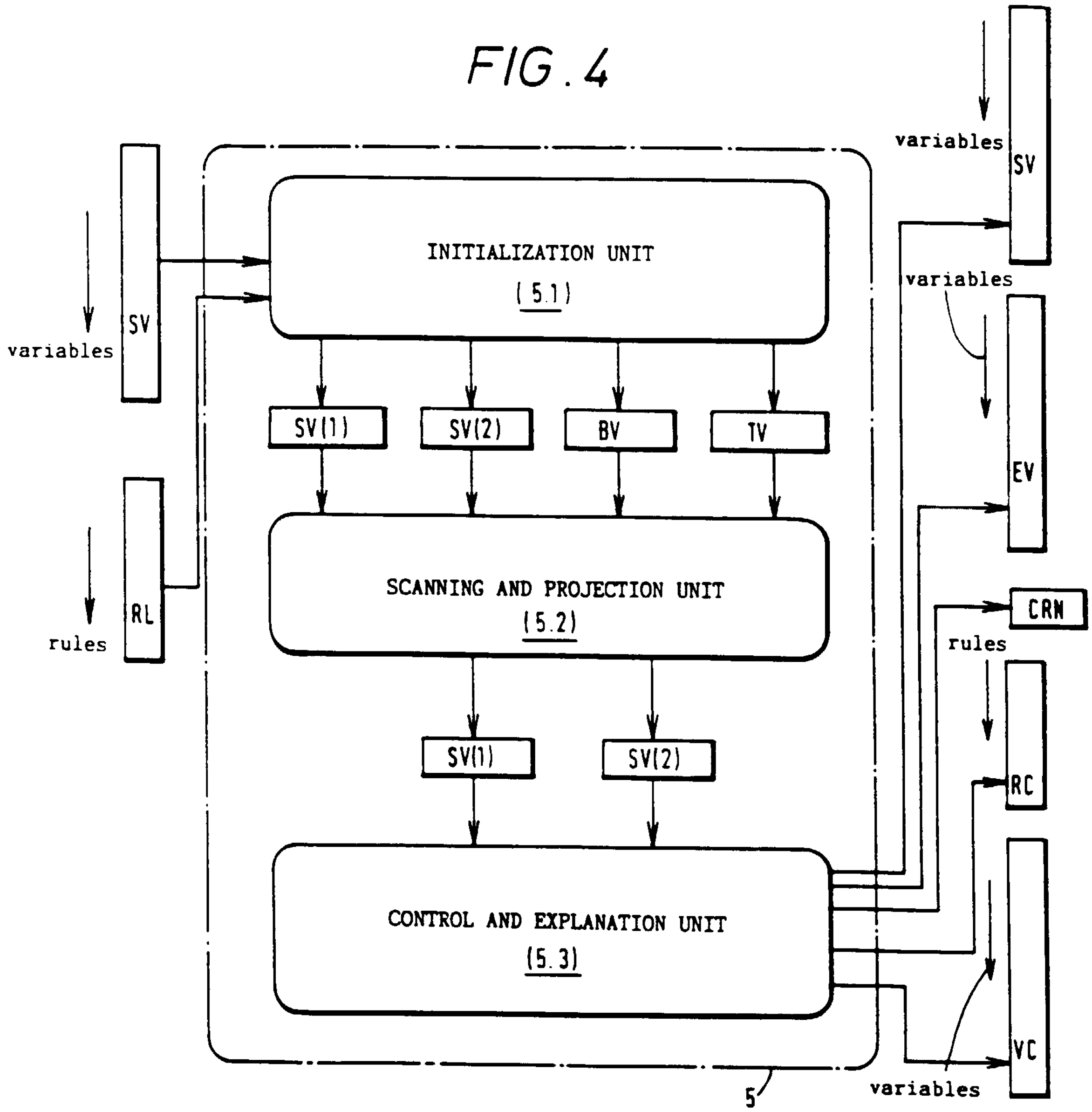
variables
SV
INITIALIZATION UNIT
(5.1)
SV(1)
SV(2)
BV
TV
rules
RL
SCANNING AND PROJECTION UNIT
(5.2)
SV(1)
SV(2)
CONTROL AND EXPLANATION UNIT
(5.3)
5
variables
SV
variables
EV
CRN
rules
RC
variables
VC

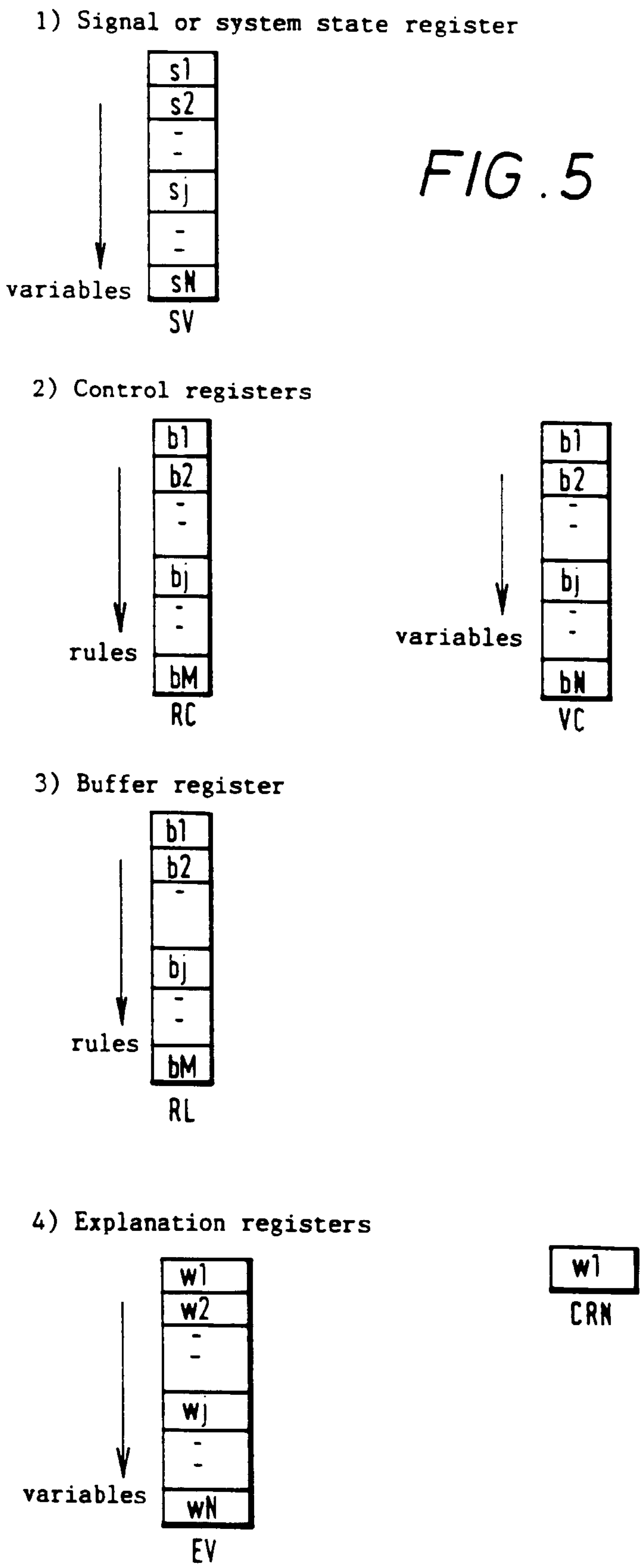
1) Signal or system state register
s1
s2
sj
sN
variables
SV
FIG.5
2) Control registers
b1
b2
bj
bM
rules
RC
b1
b2
bj
bN
variables
VC
3) Buffer register
b1
b2
bj
bM
rules
RL
4) Explanation registers
w1
w2
wj
wN
variables
EV
w1
CRN

FIG. 6

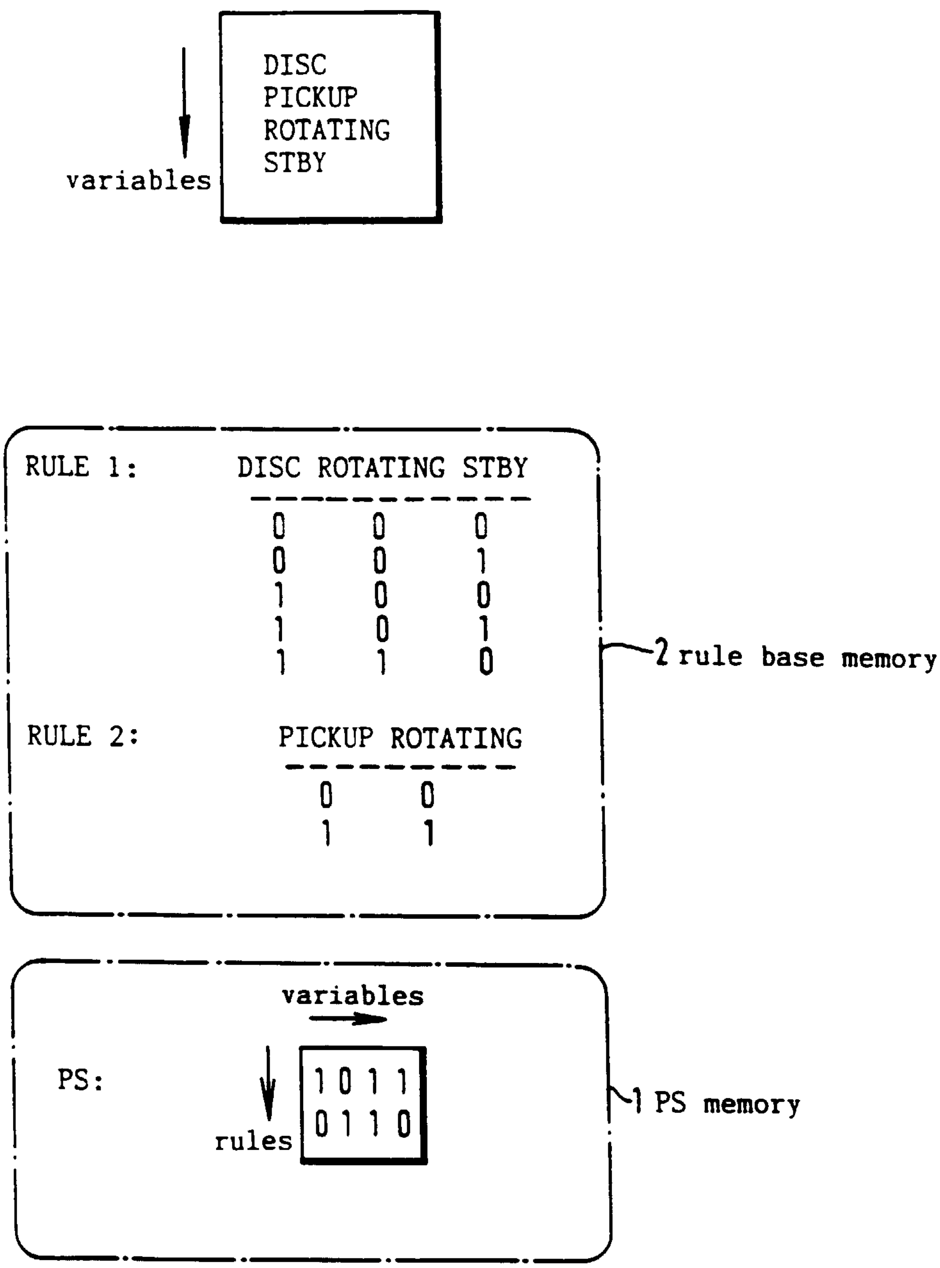

variables
DISC
PICKUP
ROTATING
STBY
RULE 1:
DISC ROTATING STBY
0 0 0
0 0 1
1 0 0
1 0 1
1 1 0
RULE 2:
PICKUP ROTATING
0 0
1 1
2 rule base memory
variables
PS:
rules
1 0 1 1
0 1 1 0
1 PS memory

FIG. 7

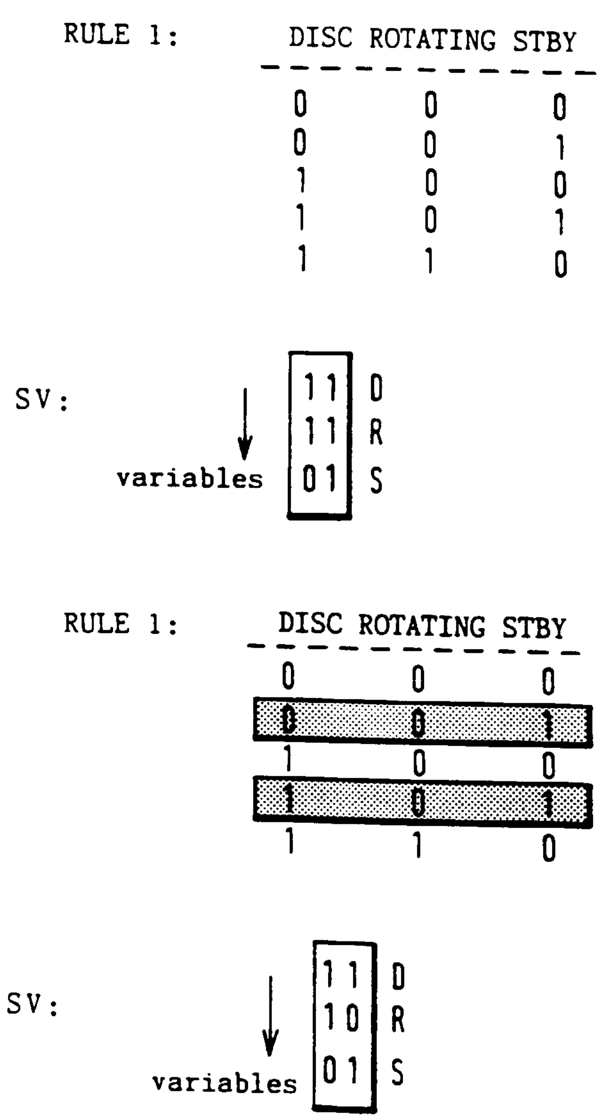
RULE 1:
DISC ROTATING STBY
0 0 0
0 0 1
1 0 0
1 0 1
1 1 0
SV:
variables
11 D
11 R
01 S
RULE 1:
DISC ROTATING STBY
0 0 0
0 0 1
1 0 0
1 0 1
1 1 0
SV:
variables
11 D
10 R
01 S

FIG.8

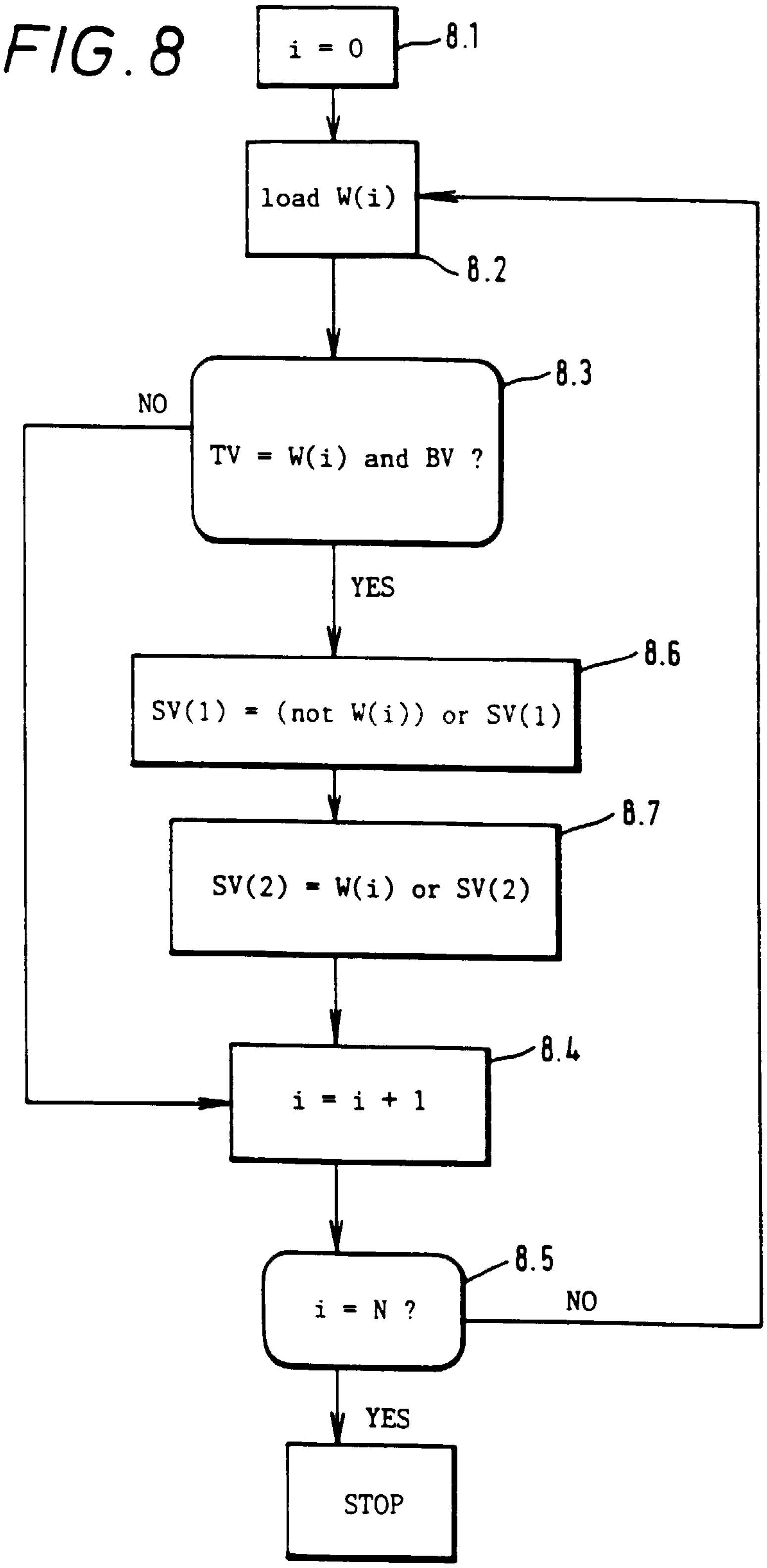
i = 0
8.1
load W(i)
8.2
8.3
NO
TV = W(i) and BV ?
YES
8.6
SV(1) = (not W(i)) or SV(1)
8.7
SV(2) = W(i) or SV(2)
8.4
i = i + 1
8.5
i = N ?
NO
YES
STOP

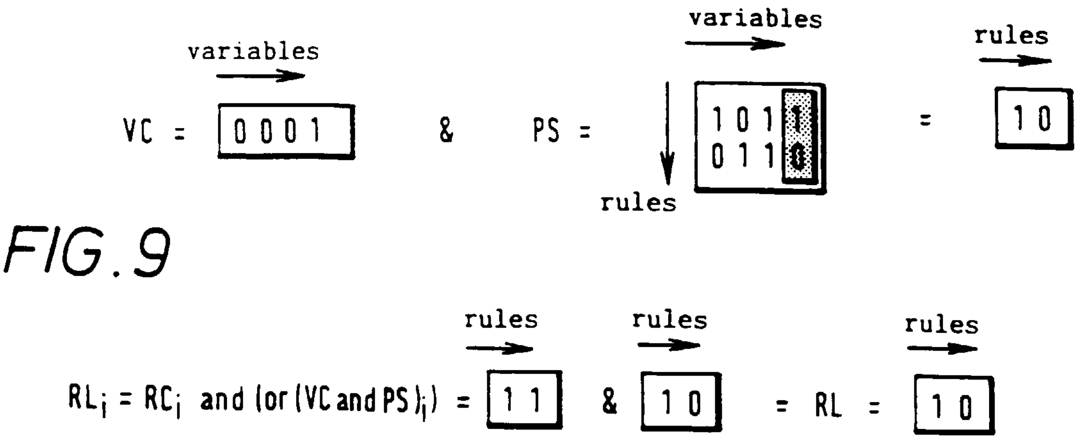


FIG. 9

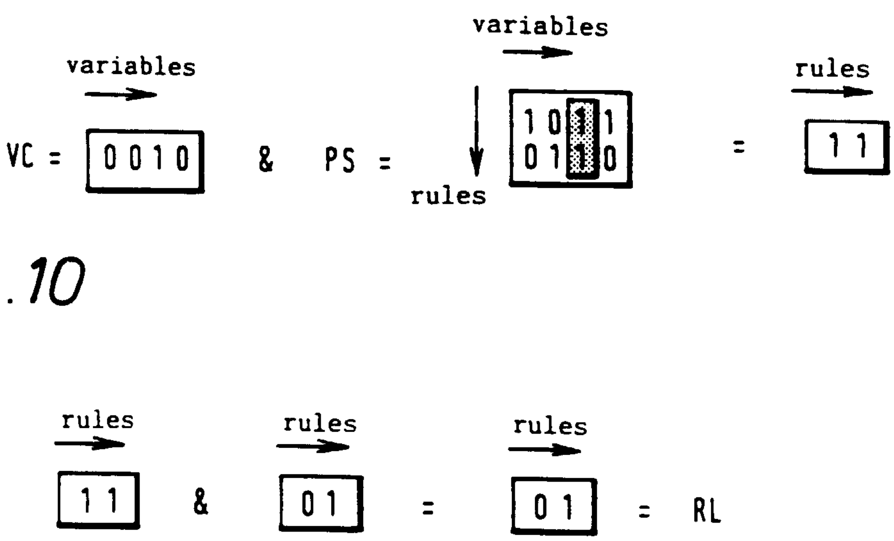


FIG. 10

FIG. 11

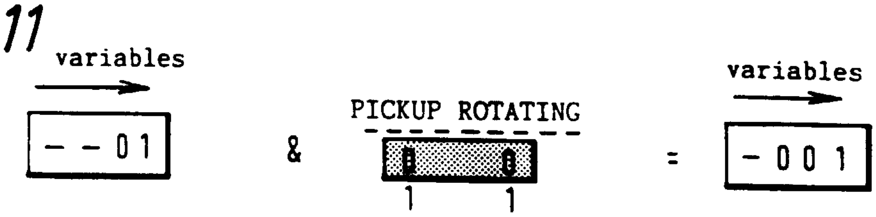

FIG. 12

(a)

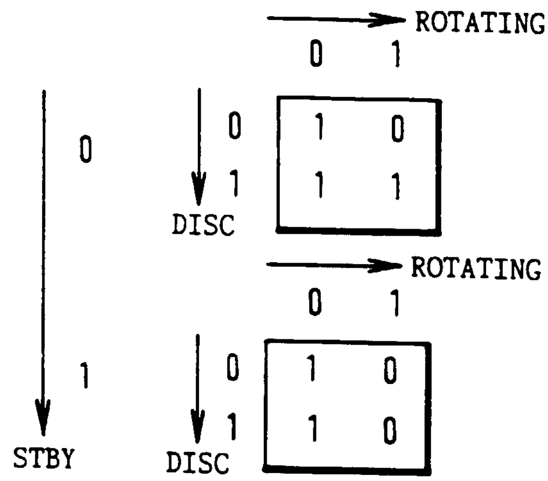
ROTATING
0 1
0
0 1 0
1 1 1
DISC
ROTATING
0 1
1
0 1 0
1 1 0
STBY
DISC

(b)

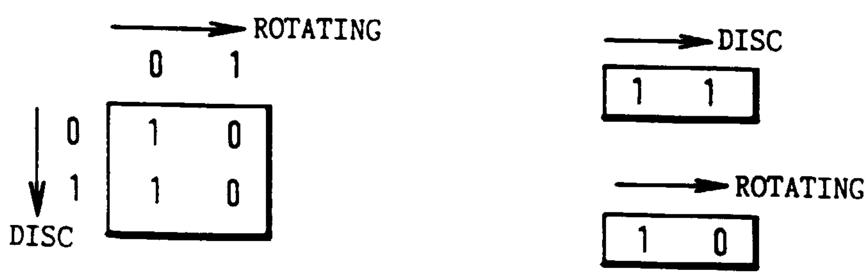
ROTATING
0 1
0 1 0
1 1 0
DISC
DISC
1 1
ROTATING
1 0

FIG. 13

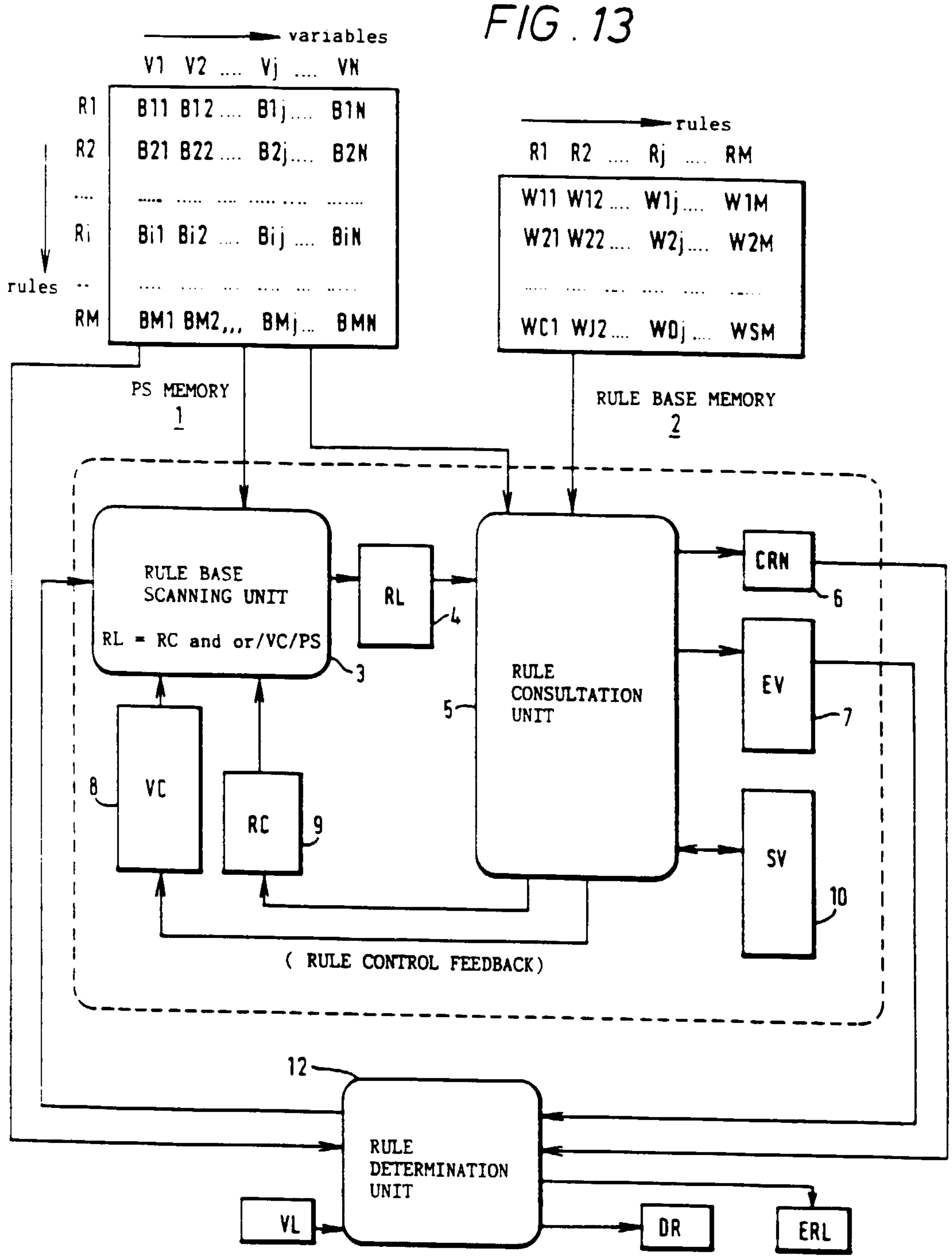
variables
V1 V2 .... Vj .... VN
R1 B11 B12 .... B1j .... B1N
R2 B21 B22 .... B2j .... B2N
Ri Bi1 Bi2 .... Bij .... BiN
rules
RM BM1 BM2,,, BMj ... BMN
PS MEMORY
1
rules
R1 R2 .... Rj .... RM
W11 W12 .... W1j .... W1M
W21 W22 .... W2j .... W2M
WC1 WJ2 .... WDj .... WSM
RULE BASE MEMORY
2
RULE BASE SCANNING UNIT
RL = RC and or/VC/PS
3
RL
4
RULE CONSULTATION UNIT
5
CRN
6
EV
7
SV
10
VC
8
RC
9
( RULE CONTROL FEEDBACK)
12
RULE DETERMINATION UNIT
VL
DR
ERL

FIG. 14

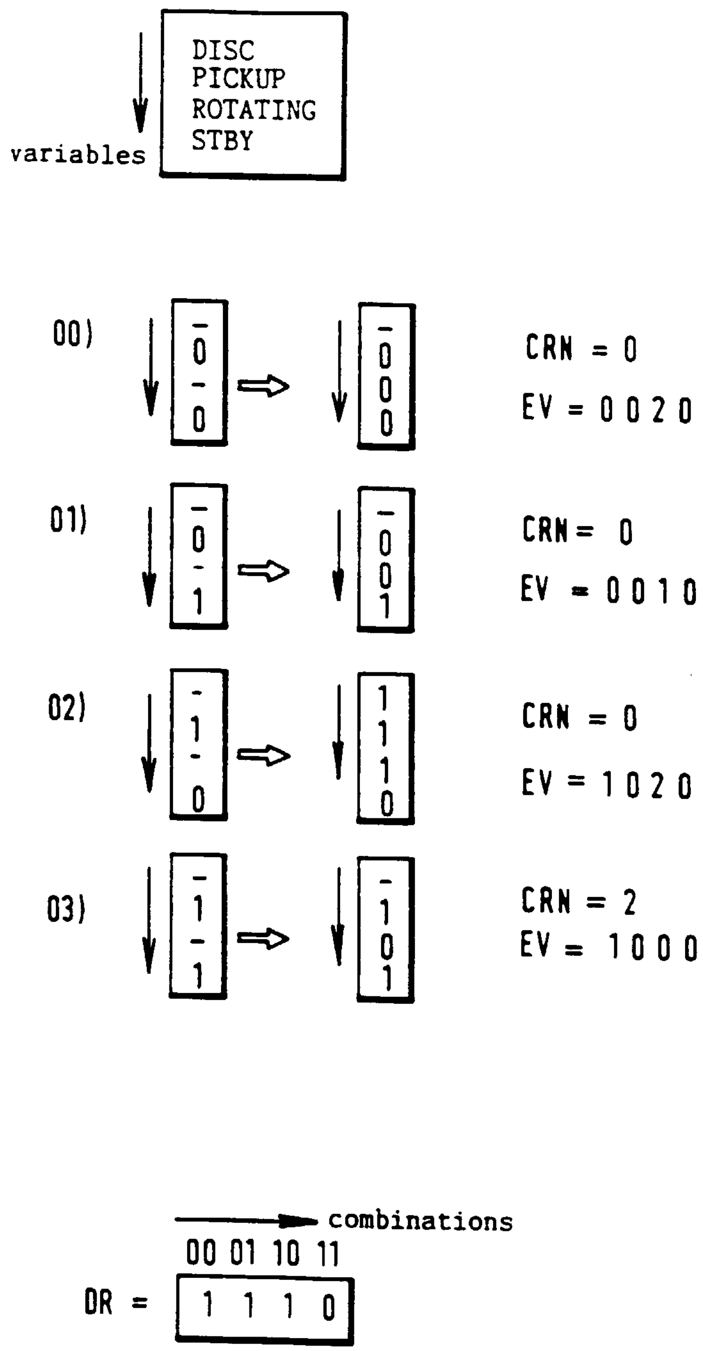
variables
DISC
PICKUP
ROTATING
STBY
00)
CRN = 0
EV = 0 0 2 0
01)
CRN = 0
EV = 0 0 1 0
02)
CRN = 0
EV = 1 0 2 0
03)
CRN = 2
EV = 1 0 0 0
combinations
00 01 10 11
DR = 1 1 1 0

FIG. 15

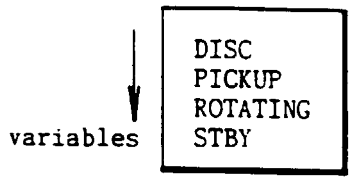
variables
DISC
PICKUP
ROTATING
STBY

(a)

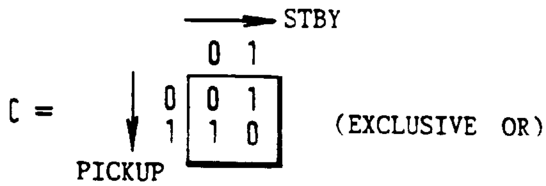
STBY
0 1
C =
0 0 1
1 1 0
PICKUP
(EXCLUSIVE OR)

(b)

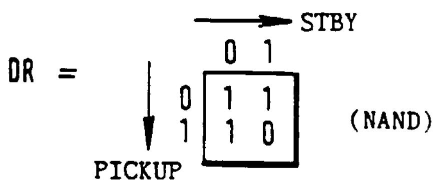
STBY
0 1
DR =
0 1 1
1 1 0
PICKUP
(NAND)

(c)

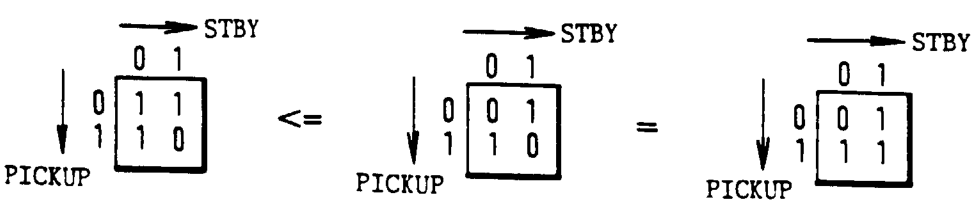
STBY
0 1
0 1 1
1 1 0
PICKUP
<=
STBY
0 1
0 0 1
1 1 0
PICKUP
=
STBY
0 1
0 0 1
1 1 1
PICKUP

FIG. 16

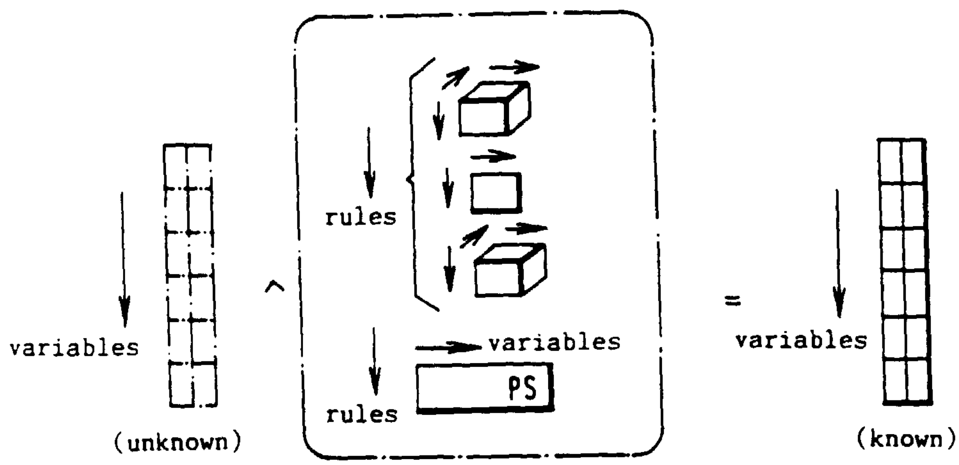


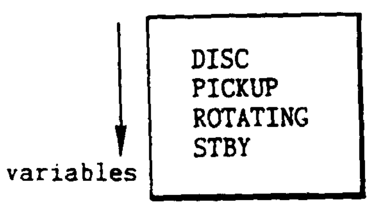


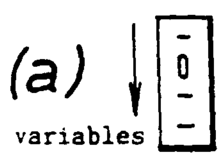


The state vector is negated, deduced, and negated again: